# EUROPEAN PATENT SPECIFICATION

(11) **EP 4 044 536 B1**
(45) Date of publication and mention of the grant of the patent: **03.12.2025**
(21) Application number: 20874105.8
(22) Date of filing: 02.10.2020
(51) Int. Cl.: H04L 25/02

(54) **SIGNAL GENERATING DEVICE AND SIGNAL READING SYSTEM**
SIGNALERZEUGUNGSVORRICHTUNG UND SIGNALLESESYSTEM
DISPOSITIF DE GÉNÉRATION DE SIGNAL ET SYSTÈME DE LECTURE DE SIGNAL

(30) Priority: 10.10.2019 JP 2019186996; 29.09.2020 JP 2020162898
(43) Date of publication of application: 17.08.2022
(73) Proprietor: Hioki E.E. Corporation, Ueda-shi, Nagano 386-1192 (JP)
(72) Inventor: YANAGISAWA Koichi, Ueda-shi Nagano 386-1192 (JP); KASAI Shin, Ueda-shi Nagano 386-1192 (JP); IKEDA Hiroyoshi, Ueda-shi Nagano 386-1192 (JP); SAKAI Tomoharu, Ueda-shi Nagano 386-1192 (JP)
(74) Representative: Vossius & Partner Patentanwälte Rechtsanwälte mbB
(86) International application number: PCT/JP2020/037561
(87) International publication number: WO 2021/070746

(56) References cited:
- JP-A- 2019 128 805
- JP-A- 2019 146 141
- JP-A- 2019 146 141
- JP-A- S4 853 605
- US-A1- 2003 174 762

## Description

### Technical Field

The present invention relates to a signal generation apparatus that generates a code specifying signal that specifies a code string corresponding to a logic signal based on a two-wire differential voltage-type logic signal transmitted via a communication path, and also to a signal reading system equipped with this type of signal generation apparatus.

### Background Art

As one example, Patent Literature 1 cited below discloses the invention of a vehicle data gathering apparatus (hereinafter referred to simply as a "gathering apparatus") configured to gather and record a variety of CAN frames (i.e., control data) transmitted via a serial bus (here, an in-vehicle LAN) used for CAN communication. This gathering apparatus is configured to connect to a diagnostic connector (i.e.**,** a connector used to connect diagnostic equipment: hereinafter referred to simply as a "connector") which is provided on the serial bus to allow external equipment to be connected for purposes such as error diagnosis and maintenance. The gathering apparatus is configured to operate on power supplied via the connector described above when connected to the connector and to automatically start and stop gathering CAN frames from the serial bus in conjunction with operation of the ignition switch.

In response to demand for an apparatus that reads CAN frames from a serial bus using a different configuration to the gathering apparatus described above (more specifically, a configuration that does not use a connector provided on the serial bus), the applicant of the present invention proposed a signal generation apparatus and a signal reading system which are disclosed in Patent Literature 2 cited below.

The signal generation apparatus includes: a detector that detects a differential signal indicating changes in a potential difference between each coated conductor that changes according to logic patterns, which are patterns in which high-potential periods and low-potential periods are arranged, in a two-wire differential voltage-type logic signal transmitted via a communication path (that is, a pair of coated conductors that compose a serial bus for CAN communication); and a signal generator, and is capable of generating a code specifying signal that can specify code strings corresponding to the logic signal.

In this configuration, the detector includes a transformer, which has a primary winding and a secondary winding, and a resistor that is connected between the terminals of the secondary winding. When a pair of electrodes are placed in contact with the respective coatings of the pair of coated conductors and signals that have been detected by the pair of electrodes via the coupling capacitance between the pair of electrodes and the pair of coated conductors are inputted into the terminals of the primary winding, the differential signal mentioned above is detected based on an output signal outputted from the terminals of the secondary winding. As the code specifying signal, the signal generator generates a signal in which a low voltage period starts when the voltage at a rising edge in the differential signal becomes equal to or higher than a first reference value and a high voltage period starts when the voltage at a falling edge in the differential signal becomes equal to or lower than a second reference value.

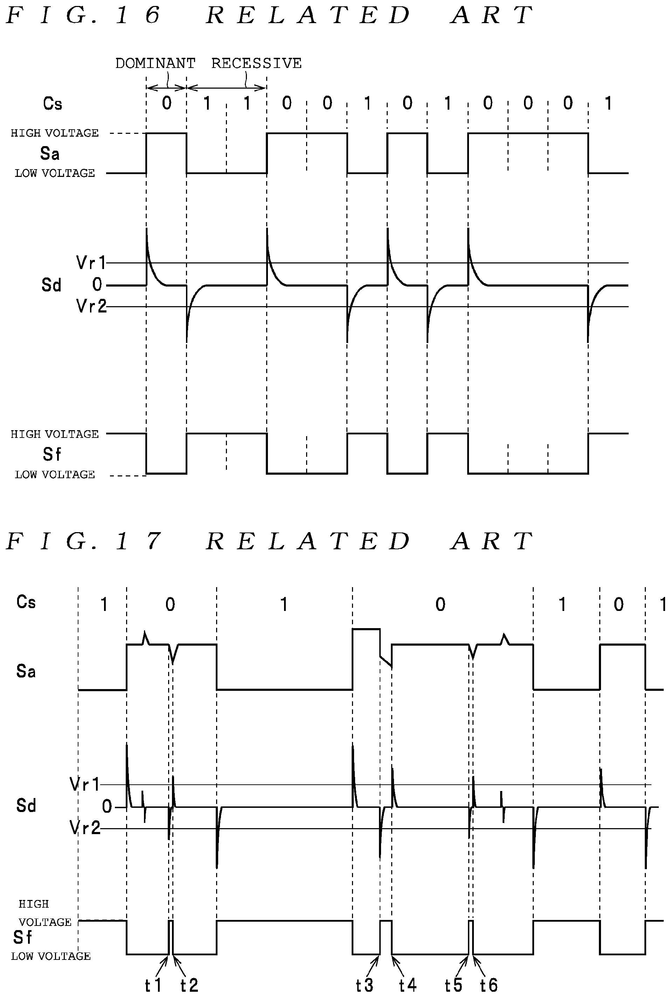

When a signal generation apparatus of this type is configured without considering the wiring capacitance of the shielded cables that connect the pair of electrodes and the detector (that is, a configuration where the wiring capacitance is so low as to be negligible), since the voltages of the coated conductors are differentiated by the coupling capacitance and transmitted to the electrodes, as depicted in FIG. 16, the differential signal Sd outputted from the detector will be a signal with a waveform (or "differential waveform") that rises from zero volts to the maximum positive voltage in a short time at the timing of a transition from a low voltage state of the logic signal Sa expressed by the differential voltage (Va-Vb) between the respective voltages Va and Vb of the pair of coated conductors (a recessive state indicating the code "Cs[1]") to a high voltage state (a dominant state indicating the code "Cs[0]") (or in other words, at the timing of a rising edge in the logic signal Sa). The differential signal Sd then gradually falls to return to zero volts, falls from zero volts to the maximum negative voltage in a short time at the timing of a transition from the high voltage state of the logic signal Sa to the low voltage state (or in other words, at the timing of a falling edge of the logic signal Sa), and then gradually rises to return to zero volts.

As one example, the signal generator disposed so as to follow the detector is composed of a hysteresis comparator that operates on two positive and negative operating voltages (as one example, ±5V) (that is, a comparator whose output voltage is divided using a resistance circuit with zero volts as a reference and applied to the noninverting input terminal and has the differential signal Sd inputted into the inverting input terminal). By using this configuration, as depicted in FIG. 16, the signal generator generates and outputs the code specifying signal Sf as a binarized signal by converting the differential signal Sd from the detector based on a positive threshold Vr1 as the first reference value obtained by using a resistance circuit to divide the output voltage on the positive side (that is, a voltage close to the operating voltage on the positive side) and a negative threshold Vr2 (where |Vr2|=|Vr1|) as the second reference value obtained by using a resistance circuit to divide the output voltage on the negative side (that is, a voltage close to the operating voltage on the negative side). With this configuration, as depicted in FIG. 16, the code specifying signal Sf includes high voltage periods corresponding to the (recessive) periods with the code "1" in the logic signal Sa, and low voltage periods corresponding to the (dominant) periods with the code "0" in the logic signal Sa.

Patent Literature 3 (US 2003/174762 A1) relates to methods and apparatus are disclosed for transitioning a receiver from a first state to a second state using an in-band signal over a differential serial data link.

Patent Literature 4 (JP 2019 146141 A) relates to a signal generating device comprising: a detection unit including a transformer having terminals to which a pair of electrodes to be brought into contact with coating parts of coated lead wires and terminals between which a resistor is connected to detect a differential signal showing a change in difference of potential between the lead wires on the basis of output signals output according to a signal input to the terminals via coupling capacitance between the lead wires and the respective electrodes; and a signal generating unit for generating a code identification signal by taking timing of voltage at the time of the signal rising being equal to or higher than a first reference value as the start of either one of a high potential period and low potential period and taking timing of voltage at the time of the signal falling being equal to or lower than a second reference value as the start of the other of the high potential period and low potential period.

### Citation List

### Patent Literature

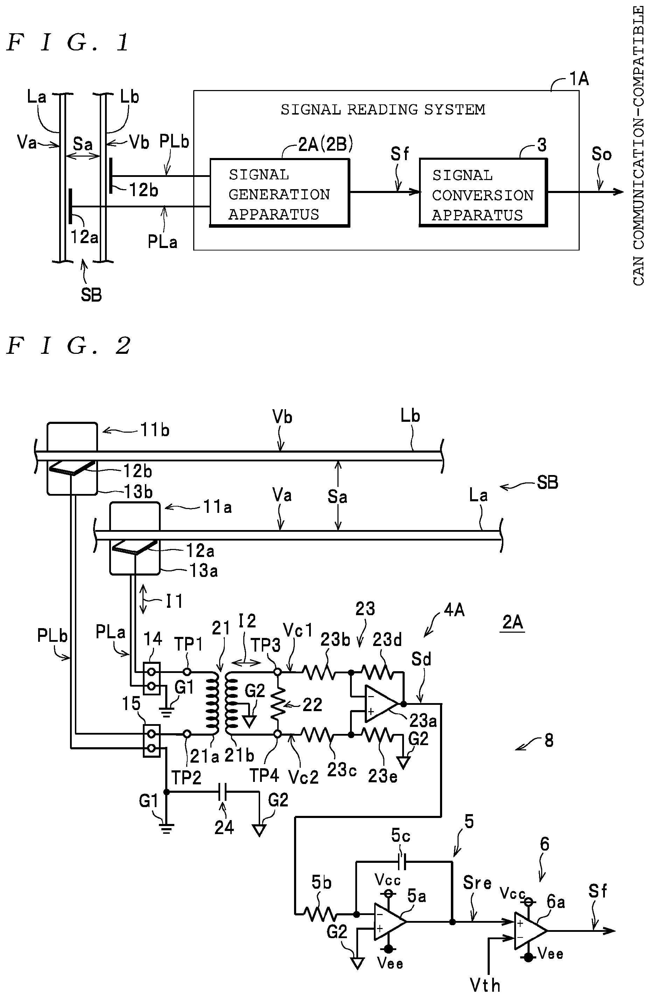

Patent Literature 1
   Japanese Laid-open Patent Publication No. 2008-70133 (see pages 4 to 11, and FIGS. 1 to 17)
Patent Literature 2
   Japanese Laid-open Patent Publication No. 2019-146141 (see pages 14 to 16, and FIGS. 1 to 3)
Patent Literature 3
   US 2003/174762 A1
Patent Literature 4
   JP 2019 146141 A

### Technical Problem

However, on a serial bus for CAN communication, situations can occur during normal operation where signals outputted from a plurality of electronic control units (ECUs) connected to the serial bus collide with each other. This means that during periods where the code Cs is "1" or "0", instead of having the ideal waveform that is constant at a voltage (a low voltage or a high voltage) corresponding to the codes "1" or "0" as depicted in FIG. 16 as described above, the signal waveform of the logic signal Sa may have a waveform that rises and falls in a pulsed or stepped manner, especially during high voltage periods, as depicted in FIG. 17. This means that with a configuration, like the signal generation apparatus proposed by the present applicant cited above, where a detector generates a differential signal Sd with a signal waveform corresponding to the differential waveform of a logic signal Sa and a signal generator composed of a hysteresis comparator compares the differential signal Sd with a positive threshold value Vr1 and a negative threshold value Vr2 to generate a code specifying signal Sf, as depicted in FIG. 17, when there is a high rate of change, such as a pulsed or stepped rise or fall, in the voltage of the logic signal Sa, there can be cases where the differential signal Sd may exceed the positive threshold value Vr1 (as examples, the timing indicated as t2, t4, and t6 in the drawing) or may fall below the negative threshold value Vr2 (as examples, the timing indicated as t1, t3, and t5 in the drawing) even at timing aside from switches between the codes Cs "1" and "0". Accordingly, as depicted in FIG. 17, the signal generator described above has a problem to be solved in that situations occur where the voltage temporarily becomes high during low voltage periods that correspond to the code "0" (that is, an erroneous code specifying signal Sf is generated).

The present invention was conceived in view of the above problem to be solved and it is a principal object of the present invention to provide a signal generation apparatus and a signal reading system that are capable of generating a code specifying signal that can correctly specify codes indicated by a logic signal while still using a configuration that connects to a communication path, such as a serial bus for CAN communication, via a coupling capacitance. This object is achieved with the features of the independent claims 1 to 4 and 7. Preferred embodiments are defined in the dependent claims.

### Solution to Problem

To achieve the stated object, a signal generation apparatus according to the present invention generates a code specifying signal capable of specifying a code corresponding to a logic signal, based on the logic signal that is transmitted via a communication path composed of a coated conductor, the signal generation apparatus comprising: a signal restorer that generates a restored signal with a signal waveform that is equivalent to a signal waveform of the logic signal by integrating a signal waveform corresponding to a differential waveform of the logic signal detected from the coated conductor; and a signal generator that generates the code specifying signal by binarizing the restored signal in comparison with a threshold voltage.

Also, in the signal generation apparatus according to the present invention described above, the signal restorer includes a transformer with a primary winding and a secondary winding and a resistor that is connected between respective terminals of the secondary winding, and the signal restorer generates the restored signal by inputting a signal, which has been detected by an electrode placed in contact with a coating of the coated conductor via a coupling capacitance between the electrode and the coated conductor, into the primary winding and integrating a signal waveform corresponding to a differential waveform of the logic signal outputted from the secondary winding. Here, as the signal generation apparatus, it is possible to use the following configuration. As one example, when the communication path is composed of a pair of coated conductors, the signal generation apparatus generates a code specifying signal capable of specifying a code corresponding to a logic signal based on a two-wire differential voltage-type logic signal transmitted via the communication path composed of the pair of coated conductors, the signal generation apparatus including: a detector that includes a transformer with a primary winding and a secondary winding and a resistor that is connected between respective terminals of the secondary winding, inputs signals, which have been detected by a pair of electrodes placed in contact with coatings of the pair of coated conductors via a coupling capacitance between the pair of electrodes and the pair of coated conductors, into respective terminals of the primary winding and outputs a detection signal with a signal waveform corresponding to a differential waveform of the logic signal based on an output signal outputted from the terminals of the secondary winding; an integrator that integrates the detection signal and outputs a restored signal with a signal waveform that is equivalent to the signal waveform of the logic signal; and a signal generator that generates the code specifying signal by binarizing the restored signal in comparison with a threshold voltage. Also, when the communication path is composed of one coated conductor, the signal generation apparatus generates a code specifying signal capable of specifying a code corresponding to a logic signal based on a logic signal transmitted via the communication path composed of the one coated conductor, the signal generation apparatus including: a detector that includes a transformer with a primary winding and a secondary winding and a resistor that is connected between respective terminals of the secondary winding, inputs signals, which have been detected by an electrode placed in contact with coating of the coated conductor via a coupling capacitance between the electrode and the coated conductor, into the primary winding and outputs a detection signal with a signal waveform corresponding to a differential waveform of the logic signal based on an output signal outputted from the secondary winding; an integrator that integrates the detection signal and outputs a restored signal with a signal waveform that is equivalent to the signal waveform of the logic signal; and a signal generator that generates the code specifying signal by binarizing the restored signal in comparison with a threshold voltage.

In an alternative solution of the signal generation apparatus according to the present invention described above, the signal restorer includes a resistance element into which a signal, which has been detected by an electrode placed in contact with a coating of the coated conductor via capacitive coupling via a coupling capacitance between the electrode and the coated conductor, is inputted, and the signal restorer generates the restored signal by integrating a signal waveform corresponding to a differential waveform of the logic signal generated at the resistance element. Here, as the signal generation apparatus, it is possible to use the following configuration. As one example, when the communication path is composed of a pair of coated conductors, the signal generation apparatus generates a code specifying signal capable of specifying a code corresponding to a logic signal based on a two-wire differential voltage-type logic signal transmitted via the communication path composed of the pair of coated conductors, the signal generation apparatus including: a detector equipped with a first resistance element that is connected to one electrode out of a pair of electrodes respectively placed in contact with coatings of the pair of coated conductors and generates a first voltage signal with a signal waveform corresponding to a differential waveform of a voltage signal transmitted on one coated conductor, out of the pair of coated conductors, that is capacitively coupled to the electrode, a second resistance element that is connected to another electrode out of the pair of electrodes and generates a second voltage signal with a signal waveform corresponding to a differential waveform of a voltage signal transmitted on another coated conductor, out of the pair of coated conductors, that is capacitively coupled to the other electrode, and a differential amplifier that outputs a detection signal with a signal waveform corresponding to the differential waveform of the logic signal based on a differential voltage between the first voltage signal and the second voltage signal; an integrator that integrates the detection signal and outputs a restored signal with a signal waveform that is equivalent to the signal waveform of the logic signal; and a signal generator that generates the code specifying signal by binarizing the restored signal in comparison with a threshold voltage. Also, when the communication path is composed of one coated conductor, the signal generation apparatus generates a code specifying signal capable of specifying a code corresponding to a logic signal based on a logic signal transmitted via the communication path composed of the one coated conductor, the signal generation apparatus including: a detector equipped with a resistance element that is connected to an electrode placed in contact with coating of the coated conductor and generates a voltage signal with a signal waveform corresponding to a differential waveform of the logic signal transmitted on the one coated conductor that is capacitively coupled to the electrode, and an amplifier that amplifies the voltage signal and outputs as a detection signal; an integrator that integrates the detection signal and outputs a restored signal with a signal waveform that is equivalent to the signal waveform of the logic signal; and a signal generator that generates the code specifying signal by binarizing the restored signal in comparison with a threshold voltage.

In an alternative solution of the signal generation apparatus according to the present invention described above, the signal restorer includes a transformer with a primary winding and a secondary winding and a resistor that is connected between respective terminals of the secondary winding, and the signal restorer generates the restored signal by inputting a signal, which has been outputted from a current detection probe attached to the coated conductor, into the primary winding and integrating a signal waveform corresponding to a differential waveform of the logic signal outputted from the secondary winding. Here, as the signal generation apparatus, it is possible to use the following configuration. As one example, when the communication path is composed of a pair of coated conductors, a signal generation apparatus generates a code specifying signal capable of specifying a code corresponding to a logic signal based on a two-wire differential voltage-type logic signal transmitted via the communication path composed of the pair of coated conductors, the signal generation apparatus including: a detector that includes a transformer with a primary winding and a secondary winding and a resistor that is connected between respective terminals of the secondary winding, inputs a current signal, which has been outputted from a first current detection probe attached to one coated conductor out of the pair of coated conductors, and another current signal, which has been outputted from a second current detection probe attached to another coated conductor out of the pair of coated conductors, into respective terminals of the primary winding and outputs a detection signal with a signal waveform corresponding to a differential waveform of the logic signal based on an output signal outputted from the terminals of the secondary winding; an integrator that integrates the detection signal and outputs a restored signal with a signal waveform that is equivalent to the signal waveform of the logic signal; and a signal generator that generates the code specifying signal by binarizing the restored signal in comparison with a threshold voltage. Also, when the communication path is composed of one coated conductor, a signal generation apparatus generates a code specifying signal capable of specifying a code corresponding to a logic signal based on a logic signal transmitted via the communication path composed of the one coated conductor, the signal generation apparatus including: a detector that includes a transformer with a primary winding and a secondary winding and a resistor that is connected between respective terminals of the secondary winding, inputs a current signal, which has been outputted from a current detection probe attached to the coated conductor, into the primary winding and outputs a detection signal with a signal waveform corresponding to a differential waveform of the logic signal based on an output signal outputted from the secondary winding; an integrator that integrates the detection signal and outputs a restored signal with a signal waveform that is equivalent to the signal waveform of the logic signal; and a signal generator that generates the code specifying signal by binarizing the restored signal in comparison with a threshold voltage.

In an alternative solution of the signal generation apparatus according to the present invention described above, the signal restorer includes a resistance element into which a signal, which has been outputted from a current detection probe attached to the coated conductor, is inputted, and generates the restored signal by integrating a signal waveform corresponding to a differential waveform of the logic signal generated at the resistance element. Here, as the signal generation apparatus, it is possible to use the following configuration. As one example, when the communication path is composed of a pair of coated conductors, the signal generation apparatus generates a code specifying signal capable of specifying a code corresponding to a logic signal based on a two-wire differential voltage-type logic signal transmitted via the communication path composed of the pair of coated conductors, the signal generation apparatus including: a detector equipped with a first resistance element that is connected to a first current detection probe attached to one coated conductor out of the pair of coated conductors and generates a first voltage signal with a signal waveform corresponding to a differential waveform of a voltage signal transmitted on the one coated conductor, a second resistance element that is connected to a second current detection probe attached to another coated conductor out of the pair of coated conductors and generates a second voltage signal with a signal waveform corresponding to a differential waveform of a voltage signal transmitted on the other coated conductor, and a differential amplifier that outputs a detection signal with a signal waveform corresponding to the differential waveform of the logic signal based on a differential voltage between the first voltage signal and the second voltage signal; an integrator that integrates the detection signal and outputs a restored signal with a signal waveform that is equivalent to the signal waveform of the logic signal; and a signal generator that generates the code specifying signal by binarizing the restored signal in comparison with a threshold voltage. Also, when the communication path is composed of one coated conductor, the signal generation apparatus generates a code specifying signal capable of specifying a code corresponding to a logic signal based on a logic signal transmitted via the communication path composed of the one coated conductor, the signal generation apparatus including: a detector equipped with a resistance element that is connected to a current detection probe attached to the coated conductor and generates a voltage signal with a signal waveform corresponding to a differential waveform of a voltage signal transmitted on the coated conductor, and an amplifier that amplifies the generated voltage signal and outputs as a detection signal; an integrator that integrates the detection signal and outputs a restored signal with a signal waveform that is equivalent to the signal waveform of the logic signal; and a signal generator that generates the code specifying signal by binarizing the restored signal in comparison with a threshold voltage.

According to an embodiment of the present invention, the signal generation apparatus according to any one of the above-described signal generation apparatuses further comprises a waveform shaper that is disposed between the signal restorer and the signal generator, shapes the restored signal into a single-ended signal whose voltage during a low voltage period is set at a target constant voltage and has a peak-to-peak voltage that is equivalent to a peak-to-peak voltage of the restored signal, and outputs the single-ended signal.

Also, according to an embodiment of the present invention, the signal generation apparatuses according to any one of above-described signal generation apparatuses, further comprises a waveform shaper that is disposed between the signal restorer and the signal generator, shapes the restored signal into a single-ended signal whose voltage during a high voltage period is set at a target constant voltage and has a peak-to-peak voltage that is equivalent to a peak-to-peak voltage of the restored signal, and outputs the single-ended signal.

Also, a signal reading system according to the present invention comprises: any one of above-described signal generation apparatuses; and a signal conversion apparatus that converts the code specifying signal generated by the signal generation apparatus into a signal of a communication format that conforms to a communication format of the logic signal and outputs the converted signal.

### Advantageous Effects of Invention

With the signal generation apparatuses described above, and a signal reading system equipped with any of these signal generation apparatuses, the signal restorer integrates a signal waveform corresponding to a differential waveform of the logic signal transmitted on the communication path composed of the coated conductors to generate a restored signal with a signal waveform that is equivalent to the signal waveform of the logic signal.

Therefore, with the signal generation apparatus and the signal reading system, even when pulse or step-shaped changes occur in the voltage of the signal waveform of the logic signal, the restored signal can be correctly binarized using a single threshold voltage at the signal generator, with such changes in the voltage having hardly any effect. This makes it possible to generate a correct code specifying signal.

According to the signal generation apparatuses described above and a signal reading system equipped with such a signal generation apparatus, since the waveform shaper aligns the voltage level on the low voltage side (that is, the voltage during a low voltage period) to a target constant voltage while maintaining the amplitude (peak-to-peak voltage) of the restored signal outputted from the signal restorer (that is, the waveform shaper shapes the restored signal into a single-ended signal) and outputs as a new restored signal to the signal generator, it is possible, by setting a voltage that is slightly higher than the target constant voltage as the threshold voltage at the signal generator, to reliably binarize the new restored signal that was shaped into a single-ended signal using the threshold voltage and generate the code specifying signal, even when the voltage level on the low voltage side of the restored signal outputted from the signal restorer fluctuates.

According to the signal generation apparatuses described above and a signal reading system equipped with such a signal generation apparatus, since the waveform shaper aligns the voltage level on the high voltage side (that is, the voltage during a high voltage period) to a target constant voltage while maintaining the amplitude (peak-to-peak voltage) of the restored signal outputted from the signal restorer (that is, the waveform shaper shapes the restored signal into a single-ended signal) and outputs as a new restored signal to the signal generator, it is possible, by setting a voltage that is slightly lower than the target constant voltage as the threshold voltage at the signal generator, to reliably binarize the new restored signal that was shaped into a single-ended signal using the threshold voltage and generate the code specifying signal, even when the voltage level on the high voltage side of the restored signal outputted from the signal restorer fluctuates.

### Brief Description of Drawings

FIG. 1
   FIG. 1 is a block diagram depicting the configuration of a signal reading system 1A.
FIG. 2
   FIG. 2 is a block diagram depicting the configuration of a signal generation apparatus 2A.
FIG. 3

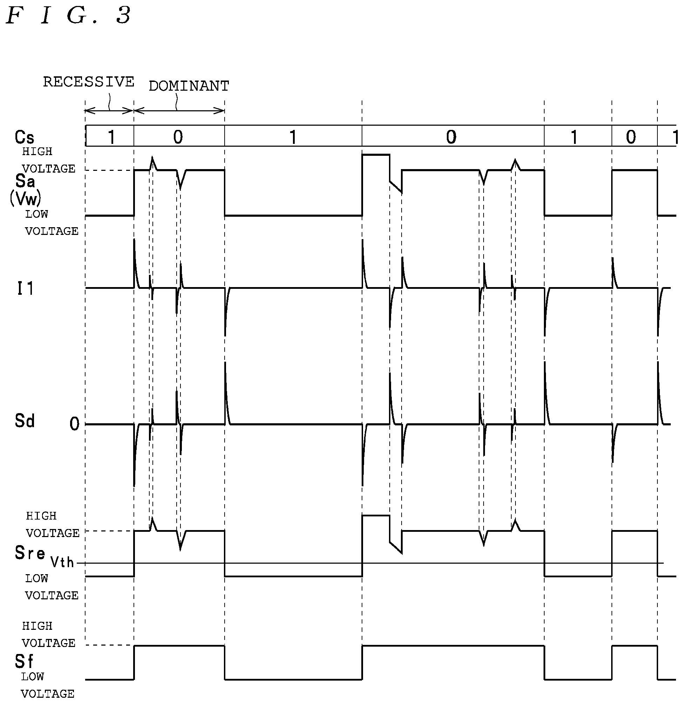

   FIG. 3 is a waveform diagram of a code Cs, a logic signal Sa, a current signal I1, a detection signal Sd, a restored signal Sre, and a code specifying signal Sf.
FIG. 4

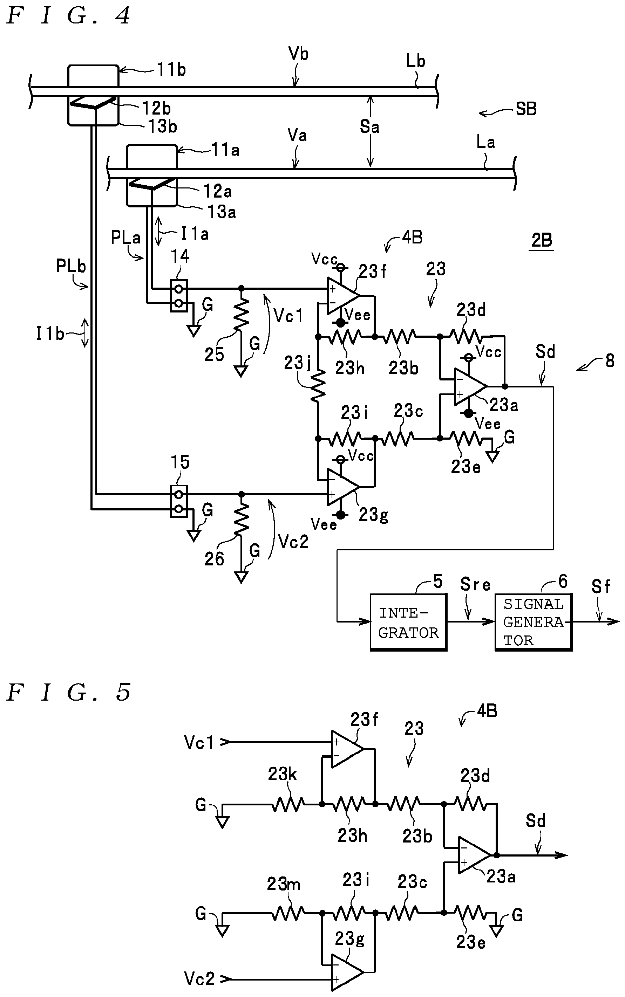

   FIG. 4 is a block diagram depicting the configuration of a signal generation apparatus 2B.
FIG. 5
   FIG. 5 is a block diagram depicting another configuration of a differential amplifier 23 appearing in FIG. 4.
FIG. 6

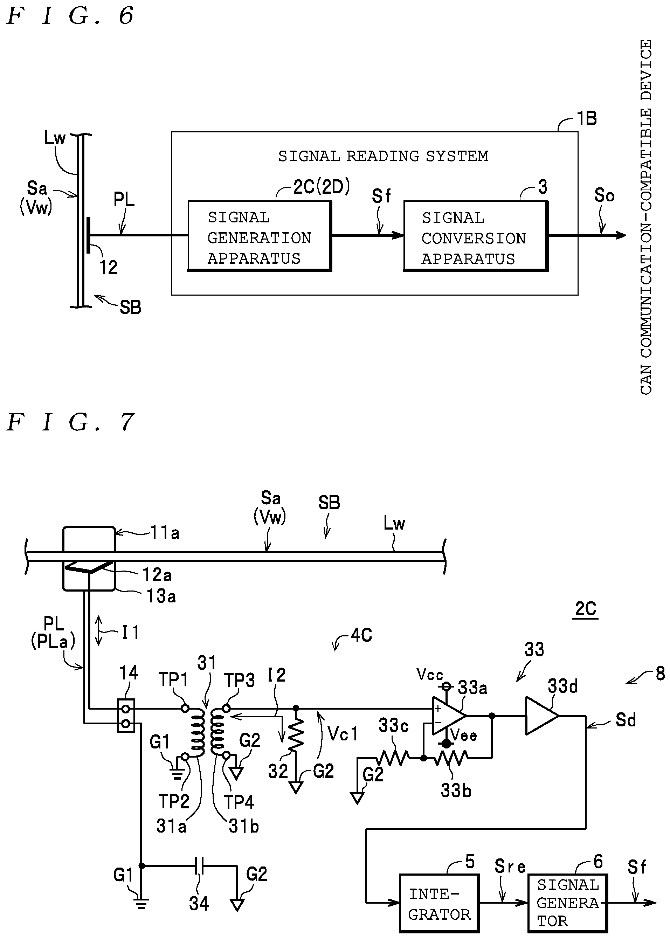

   FIG. 6 is a block diagram depicting the configuration of a signal reading system 1B.
FIG. 7
   FIG. 7 is a block diagram depicting the configuration of a signal generation apparatus 2C.
FIG. 8

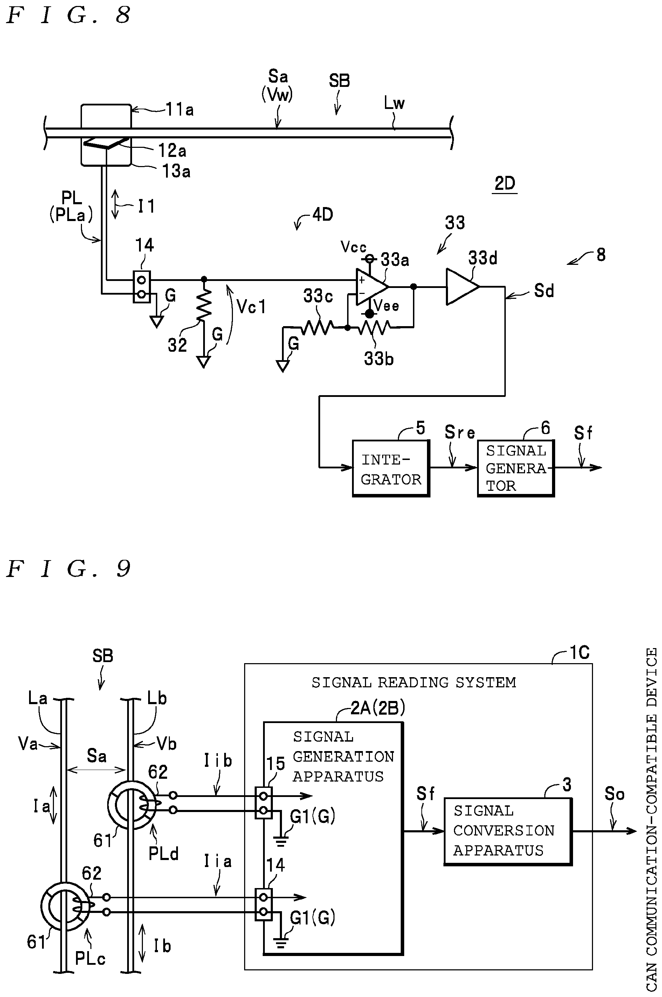

   FIG. 8 is a block diagram depicting the configuration of a signal generation apparatus 2D.
FIG. 9
   FIG. 9 is a diagram useful in explaining the configuration of a signal reading system 1C where a signal generation apparatus 2A (or 2B) is connected to coated conductors La and Lb by current detection probes PLc and PLd**.**
FIG. 10

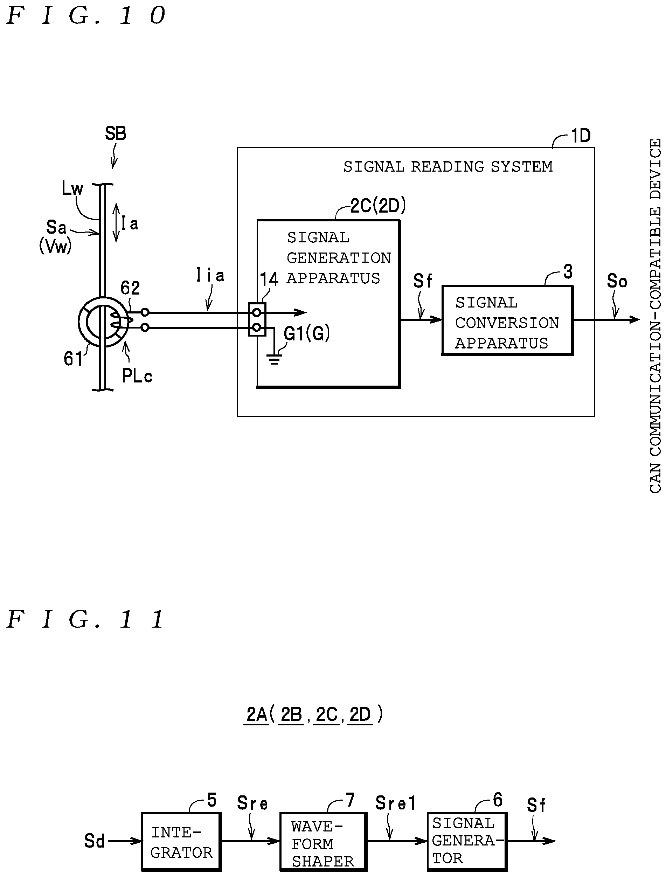

   FIG. 10 is a diagram useful in explaining the configuration of a signal reading system 1D where a signal generation apparatus 2C (or 2D) is connected to a coated conductor Lw by a current detection probe PLc.
FIG. 11
   FIG. 11 is a block diagram depicting another configuration of the signal generation apparatuses 2A, 2B, 2C and 2D (that is, a configuration including a waveform shaper 7).
FIG. 12

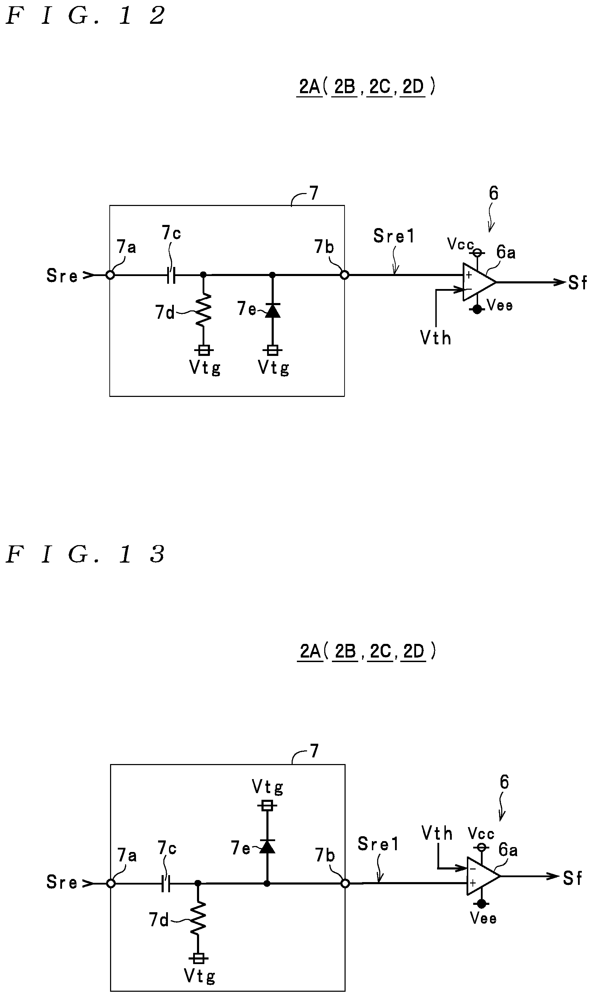

   FIG. 12 is a circuit diagram of a signal generator 6 and a waveform shaper 7 appearing in FIG. 11.
FIG. 13
   FIG. 13 is another circuit diagram of the signal generator 6 and the waveform shaper 7 appearing in FIG. 11.
FIG. 14

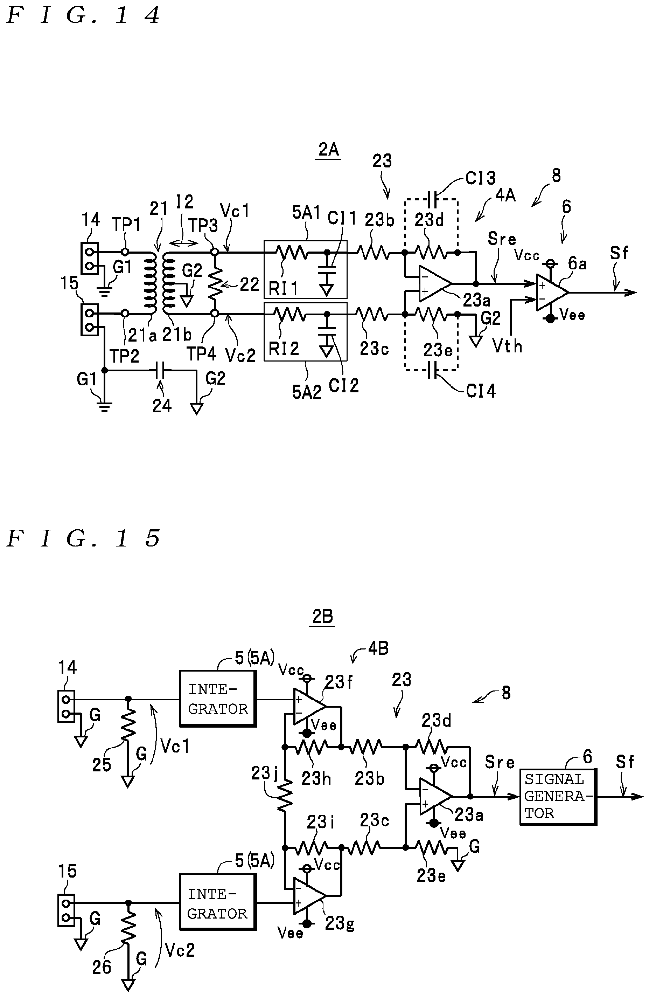

   FIG. 14 is a block diagram depicting another configuration of the signal generation apparatus 2A.
FIG. 15
   FIG. 15 is a block diagram depicting another configuration of the signal generation apparatus 2B.
FIG. 16
   FIG. 16 is a waveform diagram of a code Cs, a logic signal Sa, a differential signal Sd, and a code specifying signal Sf that is useful in explaining the background art.
FIG. 17
   FIG. 17 is a waveform diagram of a code Cs, a logic signal Sa, a differential signal Sd, and a code specifying signal Sf that is useful in explaining a problem with the background art.

### Description of Embodiments

Several embodiments of a signal generation apparatus and a signal reading system will now be described with reference to the accompanying drawings.

As depicted in FIG. 1, a signal reading system 1A, which is one example of a "signal reading system" according to the present invention, includes a signal generation apparatus 2A, which is an example of a "signal generation apparatus" according to the present invention. The signal reading system 1A is configured to detect a two-wire differential voltage-type logic signal transmitted via a communication path SB composed of a pair of coated conductors La and Lb (that is, a logic signal Sa defined by the difference between the voltages Va and Vb transferred on the coated conductors La and Lb), to generate (or "read") a code specifying signal Sf capable of specifying a code Cs corresponding to the logic signal Sa (that is, a code that is "1" or "0" as indicated by the voltage of the logic signal Sa; see FIG. 3), to convert the code specifying signal Sf to a transmission signal So that conforms to the same communication protocol as the logic signal Sa on the communication path SB, and to output (transmit) the transmission signal So to a variety of appliances that are CAN communication-compatible devices.

As the logic signal Sa, the signal generation apparatus 2A and the signal reading system 1A are compatible with various "two-wire differential voltage-type logic signals" that comply with various communication protocols such as "CAN (registered trademark) protocol", "CAN FD", and "FlexRay (registered trademark)" and/or various "two-wire differential voltage-type logic signals" that comply with various communication protocols that enable low-amplitude, low-power communication using "LVDS". Here, for a "serial bus for CAN communication" according to "CAN protocol" and "CAN FD", the "high potential-side signal line (CANH) and low potential-side signal line (CANL)" corresponds to "a pair of coated conductors for transmitting a logic signal", for a "serial bus for FlexRay communication", the "positive-side signal line (BP) and the negative-side signal line (BM)" correspond to "a pair of coated conductors for transmitting a logic signal", and for a "serial bus that communicates using LVDS", the "positive logic-side signal line and the negative logic-side signal line" correspond to "a pair of coated conductors for transmitting a logic signal". In the following description, as one example, a configuration applied to a CAN bus as a communication path SB (that is, a serial bus for CAN communication, hereinafter also referred to simply as the "CAN bus SB") installed in an automobile will be described.

As depicted in FIG. 1, the signal reading system 1A includes the signal generation apparatus 2A and a signal conversion apparatus 3 (one example of a "signal conversion apparatus" for the present invention). Since the principles used to transmit the logic signal Sa via the CAN bus SB are well known, detailed description thereof is omitted here. In the present embodiment, it is assumed that the coated conductor La is the signal line corresponding to "CANH" and the coated conductor Lb is the signal line corresponding to "CANL". With this configuration, as depicted in FIG. 3, the logic signal Sa set by the difference (Va-Vb) between the respective voltages Va and Vb has low voltage periods corresponding to recessive periods indicating the code Cs "1" and high voltage periods corresponding to dominant periods indicating the code Cs "0".

As one example, as depicted in FIG. 2, the signal generation apparatus 2A includes a detector 4A, an integrator 5, and a signal generator 6, is connected via a pair of probes PLa and PLb to the pair of coated conductors La and Lb, and generates and outputs the code specifying signal Sf.

The pair of probes PLa and PLb use shielded cables (for example, coaxial cables) and have the same configuration as contactless probes that do not make metallic contact. In more detail, the probe PLa has an electrode portion 11a, which connects (by capacitive coupling) to a core wire, not illustrated, of the coated conductor La, disposed on a free end side (free end) of the probe PLa that can be detachably connected to the corresponding coated conductor La. The probe PLa also has a connector, not illustrated, which is connected (in a fixed or detachable manner) to a corresponding input terminal portion 14 out of input terminal portions 14 and 15, described later, of the signal generation apparatus 2A, disposed on a base end side (base end) of the probe PLa. In the same way, the probe PLb has an electrode portion 11b, which connects (by capacitive coupling) to a core wire, not illustrated, of the coated conductor Lb, disposed on a free end side (free end) of the probe PLb that is detachably connected to the corresponding coated conductor Lb. The probe PLb also has a connector, not illustrated, which is connected (in a fixed or detachable manner) to a corresponding input terminal portion 15 out of the input terminal portions 14 and 15 of the signal generation apparatus 2A, disposed on a base end side (base end) of the probe PLb.

As depicted in FIGS. 1 and 2, the electrode portion 11a is equipped with: an electrode 12a which when connected to the coated conductor La contacts (touches) the insulated coating (hereinafter referred to simply as the "coating"), not illustrated, of the coated conductor La so as to become capacitively coupled to the core wire (which is the actual conductor (or metal part)), not illustrated, of the coated conductor La; and a shield 13a which prevents capacitive coupling of the electrode 12a with other metal parts (that is, metal parts aside from the core wire of the coated conductor La) by covering the part of the coating of the coated conductor La contacted by the electrode 12a and the electrode 12a itself. The electrode 12a is connected, via the core wire of the shielded cable that constructs the probe PLa and one terminal of the input terminal portion 14, to one terminal TP1 of a primary winding 21a of a transformer 21, described later, of the detector 4A. The shield 13a is connected via the shield of the shielded cable and another terminal of the input terminal portion 14 to a part (hereinafter simply "first ground G1") at a first reference potential on the primary side (that is, the primary winding 21a side of the transformer 21) of the signal generation apparatus 2A.

In the same way, as depicted in FIGS. 1 and 2, the electrode portion 11b is equipped with: an electrode 12b which when connected to the coated conductor Lb contacts (touches) the insulated coating (hereinafter referred to simply as the "coating"), not illustrated, of the coated conductor Lb so as to become capacitively coupled to the core wire (which is the actual conductor (or metal part)), not illustrated, of the coated conductor Lb; and a shield 13b which prevents capacitive coupling of the electrode 12b with other metal parts (that is, metal parts aside from the core wire of the coated conductor Lb) by covering the part of the coating of the coated conductor Lb contacted by the electrode 12b and the electrode 12b itself. The electrode 12b is connected, via the core wire of the shielded cable that constructs the probe PLb and one terminal of the input terminal portion 15, to another terminal TP2 of the primary winding 21a of a transformer 21 of the detector 4A. The shield 13b is connected via the shield of the shielded cable and another terminal of the input terminal portion 15 to the first ground G1.

With this configuration, a current path (also referred to as the "primary side current path") is formed from the core wire of the coated conductor La to the core wire of the coated conductor Lb via the coupling capacitance between the core wire of the coated conductor La and the electrode 12a, the electrode 12a itself, the core wire of the shielded cable that constructs the probe PLa, one terminal out of the input terminal portion 14, the primary winding 21a, one terminal out of the input terminal portion 15, the core wire of the shielded cable that constructs the probe PLb, the electrode 12b, and the coupling capacitance between the core wire of the coated conductor Lb and the electrode 12b. Since the primary side current path is configured by connecting capacitance components (that is, the coupling capacitances) in series in this way, on this primary side current path, a current signal I1 with a signal waveform obtained by differentiating the signal waveform of the logic signal Sa defined by the difference (Va-Vb) between the voltages Va and Vb of the coated conductors La and Lb flows with the phase state depicted in FIG. 3 (in more detail, this signal waveform of the current signal I1 is maintained at zero during periods where the signal waveform of the logic signal Sa does not change, temporarily increases in the form of spikes to the positive side in synchronization with rising edges appearing in the signal waveform of the logic signal Sa before exponentially decreasing and returning to zero, and temporarily increases in the form of spikes to the negative side in synchronization with falling edges appearing in the signal waveform of the logic signal Sa, before exponentially decreasing and returning to zero).

Together with the integrator 5, the detector 4A constructs a signal restorer 8. In the present configuration, the signal restorer 8 integrates a signal waveform corresponding to the differential waveform of the logic signal Sa detected from the coated conductors La and Lb to generate a restored signal Sre with a signal waveform that is equivalent to the signal waveform of the logic signal Sa. As depicted in FIG. 2, the detector 4A includes a transformer 21, a resistor 22, a differential amplifier 23, and a capacitor 24. The transformer 21 is equipped with the primary winding 21a and the secondary winding 21b, and is configured as an isolation transformer for electrically isolating the circuit on the primary winding 21a side and the circuit on the secondary winding 21b side. The transformer 21 converts the current signal I1 (or "primary side current signal") described above that flows through the primary winding 21a into a secondary side current signal I2 at a predetermined (fixed) current transformer ratio, and supplies the converted signal to a current path (also referred to as the "secondary side current path") that includes the secondary winding 21b.

The terminal TP1 of the primary winding 21a is connected as described above to the core wire (and in turn to the electrode 12a) of the shielded cable that constructs the probe PLa via one terminal of the input terminal portion 14, and the terminal TP2 is connected as described above to the core wire (and in turn to the electrode 12b) of the shielded cable that constructs the probe PLb via one terminal of the input terminal portion 15. With this configuration, the respective signals detected by the electrodes 12a and 12b via the coupling capacitances between the core wires of the coated conductors La and Lb are inputted into the respective terminals TP1 and TP2 of the primary winding 21a and the current signal I1 flows through the primary side current path described above including the primary winding 21a. The secondary winding 21b is configured to include a center tap. This center tap is connected to a part (hereinafter simply "second ground G2") at a second reference potential on the secondary side (that is, the secondary winding 21b side of the transformer 21) of the signal generation apparatus 2A. The capacitor 24 is connected between the first ground G1 and the second ground G2, so that both grounds G1 and G2 are isolated for direct current but are connected for alternating current.

The resistor 22 is connected between terminals TP3 and TP4 of the secondary winding 21b. With this configuration, the resistor 22 forms the secondary side current path mentioned above for the secondary winding 21b of the transformer 21 and converts the secondary side current signal I2 flowing in the secondary side current path into a voltage signal. Since the center tap of the secondary winding 21b is connected to the second ground G2, the voltage signal is split into a first voltage signal Vc1 and a second voltage signal Vc2. The first voltage signal Vc1 is generated at the terminal TP3 (that is, the first voltage signal Vc1 is outputted from the terminal TP3) with the second ground G2 as a reference. As one example, the first voltage signal Vc1 is a signal with half the amplitude of the voltage signal described above converted by the resistor 22 and the same phase as this voltage signal. The second voltage signal Vc2 is generated at the terminal TP4 (that is, outputted from the terminal TP4) with the second ground G2 as a reference. As one example, the second voltage signal Vc2 is a signal with half the amplitude of the voltage signal described above converted by the resistor 22 and the opposite phase to this voltage signal. The first voltage signal Vc1 and the second voltage signal Vc2 are outputted to the differential amplifier 23 that comes next.

As one example, the differential amplifier 23 includes an operational amplifier 23a and four resistors 23b to 23e. Out of the resistors 23b and 23c (that have the same resistance value) as the input resistors of the operational amplifier 23a, the resistor 23b is connected at one end to the inverting input terminal of the operational amplifier 23a and is connected at the other end to the terminal TP3. The resistor 23c is connected at one end to the noninverting input terminal of the operational amplifier 23a and is connected at the other end to the terminal TP4. The resistor 23d is connected between the output terminal and the inverting input terminal of the operational amplifier 23a. The resistor 23e is set at the same resistance value as the resistor 23d, is connected at one end to the noninverting input terminal, and is connected at the other end to the second ground G2. With this configuration, the differential amplifier 23 inverts and amplifies the differential voltage (Vc1-Vc2) between the first voltage signal Vc1 generated at the terminal TP3 and the second voltage signal Vc2 generated at the terminal TP4 with a gain obtained by dividing the resistance value of the resistor 23d by the resistance value of the resistor 23b and outputs the result as a detection signal Sd. Although not illustrated, the operational amplifier 23a operates on the same operating voltages Vcc and Vee (for example, a positive voltage and negative voltage of ±5V or the like) as an operational amplifier 5a, described later, that constructs the integrator 5 and a comparator 6a, described later, that constructs the signal generator 6.

As described above, since the current signal I1 inputted into the detector 4A is a differential signal for the logic signal Sa, the secondary side current signal I2 that is generated based on the current signal I1, the respective voltage signals Vc1 and Vc2, the differential voltage (Vc1-Vc2) for these voltages, and the detection signal Sd produced by amplifying this differential voltage (Vc1-Vc2) are also signals indicating a differential signal for the logic signal Sa (that is, signals with signal waveforms that correspond to a differential waveform of the logic signal Sa).

As one example, the integrator 5 is constructed of a known integration circuit composed as depicted in FIG. 2 of the operational amplifier 5a, a resistor 5b, and a capacitor 5c. The integrator 5 integrates the detection signal Sd indicating a differential signal of the logic signal Sa to generate and output the restored signal Sre with a signal waveform that is equivalent to the signal waveform of the logic signal Sa. An integration circuit capable of constructing the integrator 5 is not limited to this integration circuit, and as will be described later, it is also possible to use a known low-pass filter (RC filter) composed of a resistor and a capacitor.

With this configuration, the phase of the secondary side current signal I2 with respect to the phase of the current signal I1 (that is, the phase of the logic signal Sa), the phases of the respective voltage signals Vc1 and Vc2 (or their differential voltage (Vc1-Vc2)), and the phase of the detection signal Sd change in keeping with the polarity of the secondary winding 21b of the transformer 21 with respect to the primary winding 21a, the configuration of the differential amplifier 23 (that is, whether inverting amplification or noninverting amplification is used), and the configuration of integrator 5 (that is, whether the integrated signal is outputted with the same polarity as or the opposite polarity to the polarity of the signal being integrated). This means that the phase of the restored signal Sre with respect to the phase of the logic signal Sa can be set as in-phase or anti-phase depending on the configurations of the transformer 21, the differential amplifier 23, and/or the integrator 5 described above. For ease of understanding, in the present embodiment, it is assumed that the detection signal Sd is outputted with the phase state depicted in FIG. 3 with respect to the phase of the logic signal Sa, and that the integrator 5 with the configuration depicted in FIG. 2 integrates the detection signal Sd to generate and output the restored signal Sre with the phase state depicted in FIG. 3 (a state with the same phase as the logic signal Sa).

As one example, the signal generator 6 is configured with a comparator 6a as depicted in FIG. 2 and binarizes the restored signal Sre by comparing it with the threshold voltage Vth to generate and output the code specifying signal Sf in a state where the code specifying signal Sf is in phase with the logic signal Sa (that is, a state where the voltage is low during low voltage periods in the logic signal Sa and the voltage is high during high voltage periods in the logic signal Sa) as depicted in FIG. 3. In the restored signal Sre, since the voltage level on the low voltage side is more stable than the voltage level on the high voltage side as depicted in FIG. 3, the threshold voltage Vth is set at a voltage that is slightly higher than the voltage level on the low voltage side.

The signal conversion apparatus 3 converts the code specifying signal Sf outputted from the signal generation apparatus 2A into a transmission signal So that conforms to a communication protocol of the various CAN communication-compatible devices that are connected to the signal reading system 1A (that is, the same communication protocol as the logic signal Sa on the communication path SB, in the present embodiment, the communication protocol of the CAN bus SB) and outputs (transmits) the transmission signal So to the various CAN communication-compatible devices. As one example, the signal conversion apparatus 3 can be constructed of a variety of CAN transceivers.

Next, example usage of the signal reading system 1A and the operation of the signal reading system 1A during such example usage will be described with reference to the drawings.

First, as depicted in FIGS. 1 and 2, the electrodes 11a and 11b are respectively attached to the corresponding coated conductors La and Lb in the CAN bus SB so that the respective electrodes 12a and 12b contact (touch) the coatings of the coated conductors La and Lb, and a CAN communication-compatible device to which the transmission signal So is to be outputted is connected to the signal conversion apparatus 3.

Here, with the signal reading system 1A according to the present embodiment, since it is possible to read the logic signal Sa from the CAN bus SB simply by attaching the electrodes 11a and 11b without processing the coated conductors La and Lb themselves (that is, without peeling off the insulating coating), the signal reading system 1A can be used even when the CAN bus SB is not provided with a diagnostic connector. Also, even in cases where a diagnostic connector is provided, the location for connecting to the CAN bus SB (that is the attachment location of the electrodes 11a and 11b) is not limited to the location where the diagnostic connector is provided, and it is possible to connect (that is, to attach the electrodes 11a and 11b) to an arbitrary location in the length direction of the coated conductors La and Lb.

In this state, in the signal generation apparatus 2A, the current signal I1, which has a signal waveform obtained by differentiating the signal waveform of the logic signal Sa defined by the difference (Va-Vb) between the voltages Va and Vb on the coated conductors La and Lb, flows on the primary side current path described above that includes the primary winding 21a of the transformer 21 which constructs the detector 4A. The detector 4A converts the current signal I1 into the detection signal Sd which is a signal indicating a differential signal for the logic signal Sa (that is, a signal with a signal waveform corresponding to the differential waveform of the logic signal Sa) and outputs the detection signal Sd.

The integrator 5 integrates the detection signal Sd to generate and output a restored signal Sre with a signal waveform that is equivalent to the signal waveform of the logic signal Sa. The signal generator 6 generates and outputs the code specifying signal Sf by binarizing the restored signal Sre in comparison with the threshold voltage Vth.

After this, the signal conversion apparatus 3 converts the code specifying signal Sf into the transmission signal So and outputs (transmits) the transmission signal So to the CAN communication-compatible device that has been connected.

As described above, with the signal generation apparatus 2A and the signal reading system 1A, by using a configuration that connects to the coated conductors La and Lb via the contactless probes PLa and PLb that do not make metallic contact (that is, a configuration connected by capacitive coupling), the detector 4A detects the current signal I1 with a signal waveform obtained by differentiating the signal waveform of the logic signal Sa transmitted on the CAN bus SB composed of the coated conductors La and Lb (that is, the current signal I1 that is a differential signal for the logic signal Sa), converts the current signal I1 into the detection signal Sd which is a differential signal for the logic signal Sa, and outputs the detection signal Sd, and the integrator 5 integrates the detection signal Sd to generate the restored signal Sre with a signal waveform that is equivalent to the signal waveform of the logic signal Sa.

With a configuration like the signal generation apparatus 2A and the signal reading system 1A that detect a signal with a signal waveform obtained by differentiating the signal waveform of the logic signal Sa (for ease of explanation, hereinafter also referred to below as the "differential signal", in the present embodiment, the current signal I1), as depicted in FIG. 3, the signal waveform of the logic signal Sa can include pulsed or stepped rises or falls in the voltage at timing aside from the timing where the code Cs switches (that is, the timing of switches from the code "1" to the code "0" and from the code "0" to the code "1", in the following description, for ease of distinction, timing where the code switches is also referred to as "specified timing") due to signals colliding with each other. When this happens, as depicted in FIG. 3, in the current signal I1 obtained by differentiating the signal waveform for the logic signal Sa, and in turn in the detection signal Sd, which is a signal obtained by converting the current signal I1 into a voltage signal, spike-shaped signals are generated at such timing (that is, at timing aside from the specified timing defined above). Even when the actual change in the voltage of the logic signal Sa is small, the peak value of these spike-shaped signals will increase when the amount of change per unit time is large.

This means that with a configuration, like the signal generation apparatus proposed by the applicant of the present invention described in the background art (that is, the signal generation apparatus described with reference to Patent Literature 2 cited above), where the code specifying signal Sf is generated by directly comparing a signal (the differential signal Sd) corresponding to the detection signal Sd with a threshold (the positive side threshold Vr1 and the negative side threshold Vr2), there is the problem described above of an erroneous code specifying signal being generated. On the other hand, with the signal generation apparatus 2A and the signal reading system 1A, since the integrator 5 integrates the detection signal Sd to generate the restored signal Sr with a signal waveform that is equivalent to the signal waveform of the logic signal Sa and outputs the restored signal Sr to the signal generator 6, even when pulse or step-shaped changes occur in the voltage of the signal waveform of the logic signal Sa, the restored signal Sre can be correctly binarized using a single threshold voltage Vth at the signal generator 6, with such changes in the voltage having hardly any effect. This makes it possible to generate a correct code specifying signal Sf.

Note that the configuration of the detector 4A is not limited to the above configuration, and various other configurations can be used. As one example, although not illustrated, like the configuration disclosed in FIG. 4 of Patent Literature 2 cited above, it is also possible to use a configuration that uses a transformer with a secondary winding not provided with a center tap in place of the transformer 21 described above (that is, a transformer where the secondary winding 21b is equipped with a center tap) and uses a non-differential amplifier in place of the differential amplifier 23.

Although the detector 4A described above uses a configuration where one terminal TP1 of the primary winding 21a of the transformer 21 is connected via the probe PLa to the electrode 12a that is capacitively coupled to the coated conductor La, the other terminal TP2 of the primary winding 21a is connected via the probe PLb to the electrode 12b that is capacitively coupled to the coated conductor Lb, a primary side current path from the coated conductor La to the coated conductor Lb is formed via the primary winding 21a (that is, a current path configured by connecting capacitance components (coupling capacitances) in series), and the current signal I1 with a signal waveform obtained by differentiating the signal waveform of the logic signal Sa is detected, the configuration for detecting a signal with a signal waveform obtained by differentiating the signal waveform of the logic signal Sa is not limited to this.

As one example, although not illustrated, like the configuration disclosed in FIG. 5 of Patent Literature 2 cited above, on the primary side of the signal generation apparatus (that is, the primary winding side of the transformer), it is also possible to use a configuration where the core wire of the shielded cable that constructs the probe PLa is connected to the first ground G1 via a single first resistor, the core wire of the shielded cable that constructs the probe PLb is connected to the first ground G1 via a second resistor (with the same resistance value as the first resistor), and two current paths are formed, composed of a current path (hereinafter also referred to as the "first current path" for ease of explanation) from the coated conductor La to the first ground G1 via the coupling capacitance, the core wire of the shielded cable that constructs the probe PLa and the first resistor, and a current path (hereinafter, also referred to as the "second current path" for ease of explanation) from the coated conductor Lb to the first ground G1 via the coupling capacitance, the core wire of the shielded cable that constructs the probe PLb, and the second resistor.

With the detector of this configuration, a current signal (hereinafter also referred to as the "first current signal" for ease of explanation) with a signal waveform obtained by differentiating the signal waveform of the voltage Va of the coated conductor La flows on the first current path, with the first resistor converting this first current signal into a voltage signal (hereinafter also referred to as the "first voltage signal" for ease of explanation) and outputting the first voltage signal. Similarly, a current signal (hereinafter also referred to as the "second current signal" for ease of explanation) with a signal waveform obtained by differentiating the signal waveform of the voltage Vb of the coated conductor Lb flows on the second current path, with the second resistor converting this second current signal into a voltage signal (hereinafter also referred to as the "second voltage signal" for ease of explanation) and outputting the second voltage signal. In this detector, a differential amplifier (that is, a differential amplifier including a transformer) with an extremely high input impedance inputs the first voltage signal and the second voltage signal and amplifies the differential voltage between these voltage signals to generate the detection signal Sd.

Accordingly, even with a signal generation apparatus and a signal reading system that use a detector 4A with a configuration that detects a current signal with a signal waveform obtained by individually differentiating the signal waveforms of the voltages Va and Vb of the coated conductors La and Lb, it is still possible to achieve the same effects as the signal generation apparatus 2A and the signal reading system 1A described above.

Also, although a detector with a transformer (isolation transformer) has been described, it is also possible to use a detector 4B that does not use a transformer, as in a signal generation apparatus 2B depicted in FIG. 4. This signal generation apparatus 2B will now be described. Note that components that are the same as in the signal generation apparatus 2A have been assigned the same reference numerals, and duplicated description thereof is omitted.

As one example, as depicted in FIG. 4, the signal generation apparatus 2B includes the detector 4B, the integrator 5, and the signal generator 6, is connected to a pair of coated conductors La and Lb via the pair of probes PLa and PLb, and generates and outputs the code specifying signal Sf.

Together with the integrator 5, the detector 4B constructs the signal restorer 8. In the present configuration, the signal restorer 8 integrates a signal waveform corresponding to the differential waveform of the logic signal Sa detected from the coated conductors La and Lb to generate the restored signal Sre with a signal waveform that is equivalent to the signal waveform of the logic signal Sa. The detector 4B is equipped with two resistors 25 and 26 and the differential amplifier 23. One end of the resistor 25 as a first resistance element is connected to the electrode 12a via the input terminal portion 14 and the core wire of the shielded cable that constructs the probe PLa, and the other end is connected to the first ground G1 (in this example, since there is no distinction between the first ground G1 and the second ground G2, the expression "ground G" is used hereinafter). The resistor 26 as a second resistance element is set at the same resistance value as the resistor 25, has one end connected to the electrode 12b via the input terminal portion 15 and the core wire of the shielded cable that constructs the probe PLb, and the other end is connected to the ground G. With this configuration, in the detector 4B, two current paths composed of a first current path from the coated conductor La to the ground G via a coupling capacitance, the electrode 12a, the core wire of the shielded cable that constructs the probe PLa, and the resistor 25 and a second current path from the coated conductor Lb to the ground G via a coupling capacitance, the electrode 12b, the core wire of the shielded cable that constructs the probe PLb, and the resistor 26 are formed.

A first current signal I1a with a signal waveform obtained by differentiating the signal waveform of the voltage Va of the coated conductor La flows on the first current path, and the resistor 25 converts this first current signal I1a into a first voltage signal Vc1 and outputs the first voltage signal Vc1. Similarly, a second current signal I1b with a signal waveform obtained by differentiating the signal waveform of the voltage Vb of the coated conductor Lb flows on the second current path, and the resistor 26 converts this second current signal I1b into a second voltage signal Vc2 and outputs the second voltage signal Vc2. Since the voltage Va of the coated conductor La and the voltage Vb of the coated conductor Lb are voltage signals whose phases are respectively inverted, the first voltage signal Vc1 and the second voltage signal Vc2 are also voltage signals whose phases are respectively inverted.

In addition to the configuration of the detector 4A of the signal generation apparatus 2A (that is, the configuration depicted in FIG. 2), the differential amplifier 23 further includes two operational amplifiers 23f and 23g and three resistors 23h, 23i and 23j. The noninverting input terminal of the operational amplifier 23f is connected to one end of the resistor 25, the resistor 23h is connected between the output terminal and the inverting input terminal, and the output terminal is connected to the resistor 23b. The noninverting input terminal of the operational amplifier 23g is connected to one end of the resistor 26, a resistor 23i (that has the same resistance value as the resistor 23h) is connected between the output terminal and the inverting input terminal, and the output terminal is connected to the resistor 23c. The inverting input terminals of the operational amplifiers 23f and 23g are also connected to each other via the single resistor 23j. By using the configuration described above, the differential amplifier 23 of this embodiment is configured as an instrumentation amplifier, inputs the first voltage signal Vc1 and the second voltage signal Vc2 with a high input impedance, amplifies the difference (Vc1-Vc2) between the voltages, and outputs the result as a detection signal Sd (that is, a signal with a signal waveform corresponding to the differential waveform of the logic signal Sa).

This means that in the same way as the signal generation apparatus 2A described above and the signal reading system 1A provided with the signal generation apparatus 2A, the signal generation apparatus 2B equipped with the detector 4B that does not include a transformer and the signal reading system 1A equipped with this signal generation apparatus 2B are configured so that the integrator 5 integrates the detection signal Sd to generate a restored signal Sre with a signal waveform that is equivalent to the signal waveform of the logic signal Sa and outputs the restored signal Sre to the signal generator 6. This means it is possible to achieve the same effects as the signal generation apparatus 2A and the signal reading system 1A equipped with the signal generation apparatus 2A described above.

Note that although the detector 4B described above uses a configuration in which the differential amplifier 23 is an instrumentation amplifier, the configuration is not limited to this. As one example, in place of the configuration where the inverting input terminals of the operational amplifiers 23f and 23g are directly connected to each other via the single resistor 23j (that is, the configuration in FIG. 4), as depicted in FIG. 5, it is also possible to use a configuration where the inverting input terminals of the operational amplifiers 23f and 23g are connected to the ground G via individual resistors 23k and 23m. Although not illustrated, it is also possible to use a configuration where capacitors are individually connected in series to the respective resistors 23k and 23m so that the inverting input terminals of the operational amplifiers 23f and 23g are each connected to the ground G by an RC series circuit. When these configurations are used, it is possible to achieve the same effects as the signal generation apparatus 2B equipped with the detector 4B of the configuration depicted in FIG. 4 and the signal reading system 1A of the configuration equipped with the signal generation apparatus 2B.

Also, although the signal generation apparatuses 2A and 2B that read a two-wire differential voltage-type logic signal Sa that is transmitted to a CAN bus SB composed of two coated conductors La and Lb and a signal reading system 1A equipped with either of these signal generation apparatuses 2A and 2B have been described, with a signal generation apparatus that reads a logic signal transmitted via a communication path composed of a single coated conductor and generates a code specifying signal Sf and a signal reading system equipped with this signal generation apparatus, it is still possible, by using a configuration that connects to the single coated conductor via a contactless probe that does not make metallic contact (that is, a configuration connected by capacitive coupling), for the detector to detect a signal of a signal waveform obtained by integrating the signal waveform of a logic signal transmitted on this coated conductor and for the integrator to integrate this signal (or an amplified signal for this signal) to generate a restored signal with a signal waveform that is equivalent to the signal waveform of the logic signal. This signal generation apparatus and signal reading system will now be described with reference to FIGS. 6, 7, and 8. Note that components that are the same as either apparatus out of the signal generation apparatus 2A and the signal generation apparatus 2B described above and the signal reading system 1A equipped with such signal generation apparatus have been assigned the same reference numerals and duplicated description thereof is omitted.

As depicted in FIG. 6, the signal reading system 1B, which is one example of the "signal reading system" for the present invention, includes a signal generation apparatus which is either of a signal generation apparatus 2C and a signal generation apparatus 2D as examples of a "signal generation apparatus" according to the present invention, and is capable of detecting a single wire voltage driving-type (or simply "single wire-type") logic signal (that is, a logic signal Sa set at a voltage Vw and transmitted to the coated conductor Lw) transmitted via the communication path SB which is constructed of one coated conductor Lw, generating (reading) a code specifying signal Sf capable of specifying codes Cs corresponding to the logic signal Sa, converting this code specifying signal Sf to the transmission signal So that conforms to the same communication protocol as the logic signal Sa of the communication path SB, and outputting (transmitting) the transmission signal So to various types of CAN communication-compatible devices. The signal generation apparatuses 2C and 2D are compatible with a variety of "single wire voltage driving-type logic signals" that comply with various communication protocols, such as "CAN protocol", "CAN FD", and "FlexRay (registered trademark)" and with a variety of "single wire voltage driving-type logic signals" that comply with various communication protocols which enable low-amplitude, low-power communication using "LVDS".

First, a signal reading system 1B constructed using the signal generation apparatus 2C and the signal conversion apparatus 3 as depicted in FIG. 6 will be described. Note that components that are the same as those of the signal reading system 1A have been assigned the same reference numerals, and duplicated description thereof is omitted.

As one example, as depicted in FIG. 7, the signal generation apparatus 2C includes a detector 4C, the integrator 5, and the signal generator 6, is connected to a coated conductor Lw via a single probe PL, and generates and outputs the code specifying signal Sf. Note that since the probe PL has the same configuration as the probes PLa and PLb described earlier, it is assumed that the probe PL has the same configuration as the probe PLa as one example, and components that are the same as in the configuration of the probe PLa have been assigned the same reference numerals and duplicated description thereof is omitted.

Together with the integrator 5, the detector 4C constructs the signal restorer 8. With this configuration, the signal restorer 8 integrates a signal waveform corresponding to the differential waveform of the logic signal Sa detected from the coated conductor Lw to generate a restored signal Sre with a signal waveform that is equivalent to the signal waveform of the logic signal Sa. The detector 4C includes a transformer 31, a resistor 32 as a single resistance element, a non-differential amplifier 33 as an amplifier, and a capacitor 34.

The transformer 31 is equipped with a primary winding 31a and a secondary winding 31b, and is configured as an isolation transformer for electrically isolating the circuit on the primary winding 31a side and the circuit on the secondary winding 31b side. In more detail, one terminal TP1 of the primary winding 31a is connected to the core wire (and in turn to the electrode 12a) of the shielded cable that constructs the probe PLa via one terminal out of the input terminal portion 14, and the other terminal TP2 of the primary winding 31a is connected to a part (hereinafter simply the "first ground G1") at a first reference potential on the primary side (that is, the primary winding 31a side of the transformer 31) of the signal generation apparatus 2C. Another terminal of the input terminal portion 14 is also connected to the first ground G1. With this configuration, a current path (also referred to as the "primary side current path") is formed from the core wire of the coated conductor Lw to the first ground G1 via the coupling capacitance between the core wire and the electrode 12a, the electrode 12a itself, the core wire of the shield cable that constructs the probe PLa, one terminal out of the input terminal portion 14, and the primary winding 31a.

One terminal TP3 of the secondary winding 31b is connected to one end of the resistor 32, and the other terminal TP4 of the secondary winding 31b is connected to a part (hereinafter simply the "second ground G2") at a second reference potential on the secondary side (that is, the secondary winding 31b side of the transformer 31) of the signal generation apparatus 2C. The other end of the resistor 32 is also connected to the second ground G2. With this configuration, another current path (hereinafter the "secondary side current path") is formed from the secondary winding 31b to the other terminal TP4 (second ground G2) of the secondary winding 31b via one terminal TP3 of the secondary winding 31b and the resistor 32. The capacitor 34 is connected between the first ground G1 and the second ground G2, so that both grounds G1 and G2 are isolated for direct current but are connected for alternating current.

On the primary side current path including the primary winding 31a, a current signal I1 with a signal waveform obtained by differentiating the signal waveform of the voltage Vw of the coated conductor Lw flows with the phase state depicted in FIG. 3. The transformer 31 converts this current signal I1 (or "primary side current signal") flowing through the primary winding 31a into a secondary side current signal I2 with a predetermined (fixed) current transformer ratio, and supplies the secondary side current signal I2 to the secondary side current path composed of the secondary winding 31b and the resistor 32. The resistor 32 converts the secondary side current signal I2 into a voltage signal Vc1 and outputs the voltage signal Vc1. As one example, it is assumed that the polarity of the secondary winding 31b of the transformer 31 is set with respect to the primary winding 31a so that the voltage signal Vc1 is outputted with the same phase state as the phase state of the current signal I1 depicted in FIG. 3.

As one example, the non-differential amplifier 33 is equipped with a noninverting amplifier circuit constructed of one operational amplifier 33a and two resistors 33b and 33c and an inverting amplifier circuit 33d that inverts the output signal of the noninverting amplifier circuit and outputs the inverted output signal as the detection signal Sd. With this configuration, in the noninverting amplifier circuit, the noninverting input terminal of the operational amplifier 33a is connected to one end of the resistor 32, the resistor 33b is connected between the output terminal of the operational amplifier 33a and the inverting input terminal, and the inverting input terminal of the operational amplifier 33a is connected to the second ground G2 via the resistor 33c. By using this configuration, the non-differential amplifier 33 in this example has the overall configuration of an inverting amplifier, inputs the voltage signal Vc1 with a high impedance, inverts the phase and amplifies the voltage signal Vc1 to obtain the detection signal Sd (that is, a signal with a signal waveform corresponding to the differential waveform of the voltage Vw (that is, the differential waveform of the logic signal Sa)) with the phase state depicted in FIG. 3, and outputs the detection signal Sd. Note that it is also possible to configure the non-differential amplifier 33 as an inverting amplifier by omitting the inverting amplifier circuit 33d for example.

This means that with the signal generation apparatus 2C and the signal reading system 1B provided with the signal generation apparatus 2C, since the integrator 5 integrates the detection signal Sd to generate the restored signal Sre with a signal waveform that is equivalent to the signal waveform of the voltage Vw (that is, the signal waveform of the logic signal Sa) and outputs the restored signal Sre to the signal generator 6, it is possible to achieve the same effects as the signal generation apparatus 2B described above and the signal reading system 1A provided with the signal generation apparatus 2B.

Next, a signal reading system 1B constructed using the signal generation apparatus 2D and the signal conversion apparatus 3 as depicted in FIG. 6 will be described. Note that components that are the same as those in the signal generation apparatus 2C and the signal reading system 1B equipped with the signal generation apparatus 2C have been assigned the same reference numerals, and duplicated description thereof is omitted.

As one example, as depicted in FIG. 8, the signal generation apparatus 2D includes a detector 4D, the integrator 5, and the signal generator 6, is connected to a coated conductor Lw via a single probe PL, and generates and outputs a code specifying signal Sf. Note that since the probe PL has the same configuration as the probes PLa and PLb described earlier, it is assumed that the probe PL has the same configuration as the probe PLa as one example, and components that are the same as the configuration of the probe PLa have been assigned the same reference numerals and duplicated description thereof is omitted. Since the detector 4D also includes configurations that are the same as in the configuration of the detector 4C, components that are the same have been assigned the same reference numerals and duplicated description thereof is omitted.

Together with the integrator 5, the detector 4D constructs the signal restorer 8. With this configuration, the signal restorer 8 integrates a signal waveform corresponding to the differential waveform of the logic signal Sa detected from the coated conductor Lw to generate a restored signal Sre with a signal waveform that is equivalent to the signal waveform of the logic signal Sa. The detector 4D includes a resistor 32 and a non-differential amplifier 33 as an amplifier. In this detector 4D, one end of the resistor 32 is connected to the core wire of the shielded cable that constructs the probe PLa via one terminal of the input terminal portion 14, and the other end is connected to the ground G. One end of the resistor 32 is connected to the noninverting input terminal of the operational amplifier 33a that constructs the non-differential amplifier 33. Another terminal of the input terminal portion 14 is also connected to the ground G.

In this detector 4D, a single current path is formed from the coated conductor Lw to the ground G via the coupling capacitance, the electrode 12a, the core wire of the shielded cable that constructs the probe PL, and the resistor 32. On this current path, the current signal I1 with a signal waveform obtained by differentiating the signal waveform of the voltage Vw of the coated conductor Lw flows with the phase state depicted in FIG. 3 and the resistor 32 converts this current signal I1 into the voltage signal Vc1 and outputs the voltage signal Vc1.

As one example, the non-differential amplifier 33 is equipped with a noninverting amplifier circuit, which is constructed of one operational amplifier 33a and two resistors 33b and 33c, and an inverting amplifier circuit 33d so as to have the same construction as the non-differential amplifier 33 of the detector 4C described above, inputs the first voltage signal Vc1 with a high impedance, inverts the phase and amplifies the first voltage signal Vc1, and outputs as the detection signal Sd (a signal with a signal waveform corresponding to the differential waveform of the logic signal Sa) with the phase state depicted in FIG. 3. Note that it is also possible to configure the non-differential amplifier 33 as an inverting amplifier by omitting the inverting amplifier circuit 33d for example.

This means that with the signal generation apparatus 2D and the signal reading system 1B provided with the signal generation apparatus 2D, since the integrator 5 integrates the detection signal Sd to generate the restored signal Sre with a signal waveform that is equivalent to the signal waveform of the voltage Vw (that is, the signal waveform of the logic signal Sa) and outputs the restored signal Sre to the signal generator 6, it is possible to achieve the same effects as the signal generation apparatus 2B described above and the signal reading system 1A provided with the signal generation apparatus 2B.

Although the signal reading systems 1A and 1B described above use a configuration where the probes PLa and PLb described above, which are equipped with electrode portions 11a and 11b that become capacitively coupled to metal portions (that is, the core wires) of the coated conductors La and Lb, function as voltage detection probes and are connected to the signal generation apparatuses 2A, 2B, 2C, and 2D, the present invention is not limited to this configuration.

As one example, it is also possible to use a configuration where the code specifying signal Sf is generated by connecting, instead of the probes PLa and PLb, a first current detection probe PLc and a second current detection probe PLd (hereinafter, also referred to as the "current detection probes PLc and PLd", preferably clamp-type current detection probes that can be attached to the coated conductors La and Lb without cutting the coated conductors La and Lb) to the signal generation apparatus 2A (or 2B) as depicted in FIG. 9, or by connecting one of the current detection probes PLc and PLd (as one example in FIG. 10, the current detection probe PLc) to the signal generation apparatus 2C (or 2D) as depicted in FIG. 10. Note that since the signal generation apparatuses 2A (2B, 2C, and 2D) have already been described above, no further description is given here.

As one example, the current detection probes PLc and PLd have the same configuration and are each equipped with a current sensor including a magnetic core 61 configured to be capable of being split so that the corresponding coated conductor out of the coated conductors La and Lb can be passed through (that is, so that the corresponding coated conductor can be clamped) and a coil 62 that is wound around the magnetic core 61. In a state where the current detection probes PLc and PLd clamp the coated conductors corresponding to each current sensor (that is, the coated conductor La for the current detection probe PLc and the coated conductor Lb for the current detection probe PLd), the current detection probes PLc and PLd detect the currents flowing through the corresponding coated conductors (the current Ia flowing through the coated conductor La or the coated conductor Lw, and the current Ib flowing through the coated conductor Lb), and output current signals Ii (a current signal Iia for the voltage Va or Vw and a current signal Iib for the voltage Vb) with signal waveform(s) corresponding to the differential waveform of the signal(s) transmitted on the corresponding coated conductors to the signal generation apparatus 2A (2B, 2C, or 2D) via the shielded cable (for example, a coaxial cable).

With the current detection probes PLc and PLd, the coated conductors La and Lb that construct the CAN bus SB are partially unraveled (in the normal state, the coated conductors La and Lb are twisted together), and the respective magnetic cores 61 are attached so as to clamp the unraveled coated conductors La and Lb. However, since it is possible to unravel only a narrow range, it is necessary to use a core material with a small cross section (a cross section on a plane that is perpendicular to the circumferential direction) and a small outer diameter as each magnetic core 61. Due to this, the number of turns in the coil 62 also has to be reduced.

Accordingly, in a signal generation apparatus 2A that uses the current detection probes PLc and PLd of this configuration, although not illustrated, since the current signals Iia and Iib from the current detection probes PLc and PLd are inputted into the terminals TP1 and TP2 of the primary winding 21a, a current signal with a signal waveform that is equivalent to the signal waveform of the current signal I1 described above (that is, a signal waveform obtained by differentiating the signal waveform of the logic signal Sa) flows on the primary side current path including the primary winding 21a. In the signal generation apparatus 2C that uses the current detection probe PLc, although not illustrated, since the current signal Iia from the current detection probe PLc is inputted into the terminal TP1 of the primary winding 21a, a current signal with a signal waveform that is equivalent to the signal waveform of the current signal I1 described above (that is, a signal waveform obtained by differentiating the signal waveform of the logic signal Sa) flows on the primary side current path including the primary winding 21a.

Similarly, in a signal generation apparatus 2B that uses the current detection probes PLc and PLd, although not illustrated, the current signal Iia (with a signal waveform that is equivalent to the first current signal I1a described above) from the current detection probe PLc flows on the first current path that includes the resistor 25 (that is, a current path on the current detection probe PLC side), and the current signal Iib from the current detection probe PLd (that is, a signal waveform that is equivalent to the second current signal I1b described above) flows on the second current path including the resistor 26 (that is, the current path on the current detection probe PLd side). In a signal generation apparatus 2D that uses the current detection probe PLc, although not illustrated, the current signal Iia from the current detection probe PLc (with a signal waveform that is equivalent to the current signal I1 described above) flows on a current path including the resistor 32.

By doing so, even when the signal generation apparatus 2A (or 2B, 2C, or 2D) uses a configuration that is connected to the current detection probes PLc and PLd, in the same way as a configuration where the probes PLa and PLb are connected, the detector 4A (or 4B, 4C, or 4D) outputs the detection signal Sd described above, the integrator 5 integrates the detection signal Sd to generate and output the restored signal Sre with a signal waveform that is equivalent to the signal waveform of the logic signal Sa, and the signal generator 6 binarizes the restored signal Sre in comparison with the threshold voltage Vth to generate and output the code specifying signal Sf (see FIG. 3).

Although the signal generator 6 described above uses a configuration that generates the code specifying signal Sf by binarizing the restored signal Sre using the threshold voltage Vth that is set based on the more stabilized voltage level (in the example described above, the voltage level on the low voltage side) out of a low voltage side voltage level and a high voltage side voltage level in the restored signal Sre, noise with a lower frequency than the frequency of the logic signal Sa (for example, noise with a similar frequency to commercial electrical power) may be superimposed on the restored signal Sre. In this case, since even the voltage level described above that was considered to be stable will be affected by noise and fluctuate as a result, a situation may occur where the signal generator 6 is not capable of correctly binarizing the restored signal Sre based on the constant threshold voltage Vth.

To make it possible for the signal generator 6 to correctly binarize the restored signal Sre based on the constant threshold voltage Vth even when this happens, it is also possible to use a configuration where various types of waveform shaper (hereinafter referred to as a "waveform shaper 7") disclosed by the applicant in Patent Literature 2 cited above are disposed (interposed) between the integrator 5 and the signal generator 6 as depicted in FIG. 11. This configuration can be used for any of the signal generation apparatuses 2A, 2B, 2C, and 2D described above.

An example of using the waveform shaper with the simplest configuration (that is, a waveform shaper composed of a capacitor, a resistor, and a diode) out of the waveform shapers disclosed in Patent Literature 2 cited above will now be described in detail.

First, for a configuration where the threshold voltage Vth used in the signal generator 6 is set based on the voltage level on the low voltage side of the restored signal Sre, it is necessary to keep the voltage level on the low voltage side of the restored signal Sre constant (that is, stabilized at a predetermined constant voltage (hereinafter also referred to as the "target constant voltage Vtg")). Here, as depicted in FIG. 12, the waveform shaper 7 is equipped with a capacitor 7c that is connected between an input terminal 7a into which the restored signal Sre is inputted and an output terminal 7b that outputs a newly stabilized restored signal Sre1, a resistor 7d that has one end connected to the output terminal 7b and the target constant voltage Vtg applied to the other end, and a diode 7e whose cathode terminal is connected to the output terminal 7b and that has the target constant voltage Vtg applied to the anode terminal. With the waveform shaper 7 of this configuration, when the forward voltage drop of the diode 7e can be regarded as negligible, the amplitude (that is, the peak-to-peak voltage) of the inputted restored signal Sre is maintained, the voltage level on the low voltage side (that is, the voltage during the low voltage periods) is aligned to the target constant voltage Vtg (or in other words, is shaped to a single-ended signal) and the result is outputted as the restored signal Sre1.

This means that by setting a voltage that is slightly higher than the target constant voltage Vtg as the threshold voltage Vth at the signal generator 6 that comes after the waveform shaper 7, it is possible to generate the code specifying signal Sf by reliably binarizing the restored signal Sre at the threshold voltage Vth even when the voltage level on the low voltage side of the restored signal Sre fluctuates.

Next, as one example, a case where the restored signal Sre is outputted in the signal generation apparatuses 2A, 2B, 2C, and 2D with inverted phase with respect to the phase state depicted in FIG. 3 will be described. In this case, the threshold voltage Vth in the signal generator 6 is set at the voltage level on the high voltage side of the restored signal Sre. With this configuration, it is necessary to keep the voltage level on the high voltage side of the restored signal Sre constant (that is, stabilized at the target constant voltage Vtg). Here, as depicted in FIG. 13, the waveform shaper 7 has the same configuration for the capacitor 7c and the resistance 7d as the configuration depicted in FIG. 12. On the other hand, unlike the configuration depicted in FIG. 12, the diode 7e has a configuration where the anode terminal is connected to the output terminal 7b and the target constant voltage Vtg is applied to the cathode terminal. The waveform shaper 7 with this configuration maintains the amplitude of the inputted restored signal Sre, aligns the voltage level on the high voltage side to the target constant voltage Vtg, and outputs the result as the restored signal Sre1.

Accordingly, by setting a voltage that is slightly lower than the target constant voltage Vtg as the threshold voltage Vth at the signal generator 6 that comes after the waveform shaper 7, it is possible to generate the code specifying signal Sf by reliably binarizing the restored signal Sre at the threshold voltage Vth, even when the voltage level on the high voltage side of the restored signal Sre fluctuates.

As described above, since the waveform shaper 7 has a function of aligning the voltage level of the desired voltage (that is, the potential of the voltage side to be compared with the threshold voltage Vth in the signal generator 6) out of the low voltage side and the high voltage side of the restored signal Sre to a target constant voltage Vtg that is constant, or in other words, a function of fixing at the target constant voltage Vtg, the waveform shaper 7 can also be referred to as a "reference potential fixing circuit". According to the signal generation apparatuses 2A, 2B, 2C, and 2D equipped with the waveform shaper 7 and the signal reading systems 1A, 1B, 1C, and 1D, as described above, it is possible at the signal generator 6 to reliably binarize the restored signal Sre using the threshold voltage Vth to generate the code specifying signal Sf.

Note that the configuration of the signal restorer 8 is not limited to the configuration described above, and it is possible to use various other configurations. As one example, although examples where the integrator 5 is disposed after the detectors 4A to 4D have been described for the signal generation apparatuses 2A to 2D described above, the location of the integrator 5 is not limited to this. In the signal generation apparatuses 2A and 2B for example, it is possible to dispose the integrator 5 at any arbitrary position from the electrode portion 11a (or the current detection probe PLc (the coil 62)) to the signal generator 6 and any arbitrary position from the electrode portion 11b (or the current detection probe PLd (the coil 62)) to the signal generator 6. In the signal generation apparatuses 2C and 2D, the integrator 5 can be disposed at an arbitrary position from the electrode portion 11a (or the current detection probe PLc (the coil 62)) to the signal generator 6. Also, as described above, the integrator 5 can also be configured using a known low-pass filter (or "RC filter") composed of a resistor and a capacitor. Note that in the following description, components that are the same as in the signal generation apparatuses 2A and 2B have been assigned the same reference numerals and duplicate description thereof is omitted. Duplicated description is also omitted for operations that are the same as the signal generation apparatuses 2C and 2D.

In more detail, for the signal generation apparatus 2A as one example, as depicted in FIG. 14, a low-pass filter-type integrator 5A1 composed of a resistor RI1 and a capacitor CI1 is disposed between the terminal TP3 of the secondary winding 21b of the transformer 21 and the other end of the resistor 23b and a low-pass filter-type integrator 5A2 (hereinafter also referred to as the "integrator 5A" when no distinction is made between the integrators 5A1 and 5A2) composed of a resistor RI2 and a capacitor CI2 with the same configuration as the integrator 5A1 is disposed between the terminal TP4 of the secondary winding 21b of the transformer 21 and the other end of the resistor 23c. With this configuration also, the signal restorer 8 integrates a signal waveform that corresponds to the differential waveform of the logic signal Sa detected from the coated conductors La and Lb to generate the restored signal Sre with a signal waveform that is equivalent to the signal waveform of the logic signal Sa and outputs the restored signal Sre to the signal generator 6. In more detail, at the signal restorer 8, the integrator 5A1 integrates the first voltage signal Vc1 generated at the terminal TP3 with the second ground G2 as a reference and outputs an integrated signal, the integrator 5A2 integrates the second voltage signal Vc2 generated at the terminal TP4 with the second ground G2 as a reference and outputs another integrated signal, and the differential amplifier 23 inverts and amplifies a differential voltage between the integrated signal outputted from the integrator 5A1 and the integrated signal outputted from the integrator 5A2 by a gain obtained by dividing the resistance value of the resistor 23d by the resistance value of the resistor 23b to generate the restored signal Sre depicted in FIG. 3 and outputs the restored signal Sre to the signal generator 6.

With the signal generation apparatus 2A, it is also possible, for a configuration where the integrators 5A1 and 5A2 are not provided, that is, where the terminal TP3 of the secondary winding 21b of the transformer 21 and the other end of the resistor 23b are connected, and the terminal TP4 of the secondary winding 21b and the other end of the resistor 23c are connected, to use a configuration where capacitors CI3 and CI4 with the same capacitance value are connected in parallel to the resistors 23d and 23e, respectively, as depicted by the broken lines in FIG. 14. In a signal restorer 8 of this configuration, the differential amplifier 23 inverts and amplifies the differential voltage between the first voltage signal Vc1 and the second voltage signal Vc2 by a gain obtained by dividing the resistance value of the resistor 23d by the resistance value of the resistor 23b, and integrates the result to generate the restored signal Sre depicted in FIG. 3 which is outputted to the signal generator 6. Also, although not illustrated, it is possible to use a configuration where integrators 5 (or integrators 5A) are disposed between the electrode portion 11a (or the current detection probe PLc (the coil 62)) and the terminal TP1 of the primary winding 21a of the transformer 21 and between the electrode portion 11b (or the current detection probe PLd (the coil 62)) and the terminal TP2 of the primary winding 21a.

With the signal generation apparatus 2B also, as depicted in FIG. 15, it is also possible to use a configuration where an integrator 5 (or the integrator 5A) is disposed both between one end of the resistor 25 and the noninverting input terminal of the operational amplifier 23f and between one end of the resistor 26 and the noninverting input terminal of the operational amplifier 23g. Although not illustrated, it is possible to use a configuration where the integrators 5 (or integrators 5A) are not disposed at such positions and an integrator 5 (or an integrator 5A) is instead disposed both between the output terminal of the operational amplifier 23f and the other end of the resistor 23b and between the output terminal of the operational amplifier 23g and the other end of the resistor 23c. In addition, although not illustrated, it is also possible to use a configuration where capacitors CI3 and CI4 are disposed in parallel with the resistors 23d and 23e without disposing the integrators 5 (or the integrators 5A) at such positions. Although not illustrated, it is also possible to use a configuration where an integrator 5 (or an integrator 5A) is disposed both between the electrode portion 11a (or the current detection probe PLc (the coil 62)) and one end of the resistor 25 and between the electrode portion 11b (or the current detection probe PLd (the coil 62)) and one end of the resistor 26. In the same way as the signal restorer 8 of the signal generation apparatus 2A described above, a signal restorer 8 with the configurations described above generates the restored signal Sre depicted in FIG. 3 and outputs the restored signal Sre to the signal generator 6.

In the same way, with the signal generation apparatus 2C also, it is possible to use a configuration where an integrator 5 (or integrator 5A) is disposed between the terminal TP3 of the secondary winding 21b of the transformer 21 and the noninverting input terminal of the operational amplifier 33a, a configuration where the capacitor CI3 is connected in parallel to the resistor 33b, and a configuration where an integrator 5 (or the integrator 5A) is disposed between the electrode portion 11a (or the current detection probe PLc (the coil 62)) and the terminal TP1 of the primary winding 21a in the transformer 21. Even when any of these configurations is used, the signal restorer 8 integrates a signal waveform corresponding to the differential waveform of the logic signal Sa detected from the coated conductor Lw to generate the restored signal Sre with a signal waveform that is equivalent to the signal waveform of the logic signal Sa and outputs the restored signal Sre to the signal generator 6.

With the signal generation apparatus 2D also, it is possible to use a configuration where an integrator 5 (or an integrator 5A) is disposed between one end of the resistor 32 and the noninverting input terminal of the operational amplifier 33a, a configuration where a capacitor CI3 is connected in parallel to the resistor 33b, and a configuration where an integrator 5 (or an integrator 5A) is disposed between the electrode portion 11a (or the current detection probe PLc (the coil 62)) and one end of the resistor 32. Even when any of these configurations is used, the signal restorer 8 integrates a signal waveform corresponding to the differential waveform of the logic signal Sa detected from the coated conductor Lw to generate the restored signal Sre with a signal waveform that is equivalent to the signal waveform of the logic signal Sa and outputs the restored signal Sre to the signal generator 6.

According to the signal generation apparatuses 2A, 2B, 2C, and 2D equipped with the integrators 5 and 5A and the signal reading systems 1A and 1B equipped with these signal generation apparatuses 2A, 2B, 2C and 2D, since the signal restorer 8 is configured to integrate a signal waveform corresponding to the differential waveform of the logic signal Sa detected from the coated conductors La and Lb (or the coated conductor Lw) to generate the restored signal Sre with a signal waveform that is equivalent to the signal waveform of the logic signal Sa, it is possible, even in a state where pulse-like or step-like changes occur in the voltage in the signal waveform of the logic signal Sa, the restored signal Sre can be correctly binarized at the signal generator 6 using one threshold voltage Vth with hardly any effect from such changes in voltage, which makes it possible to generate a correct code specifying signal Sf.

### Industrial Applicability

According to the present invention, it is possible to reliably binarize a new restored signal, which has been shaped into a single-ended signal, using a threshold voltage and thereby generate a code specifying signal. By doing so, the present invention can be widely applied to a signal generation apparatus that generates a code specifying signal and a signal reading system equipped with this signal generation apparatus.

### Reference Signs List

- 1A, 1B, 1C, 1D: Signal reading system
- 2A, 2B, 2C, 2D: Signal generation apparatus
- 3: Signal conversion apparatus
- 4A, 4B, 4C, 4D: Detector
- 5, 5A: Integrator
- 6: Signal generator
- 7: Waveform shaper
- 8: Signal restorer
- 12a, 12b: Electrode
- 21: Transformer
- 21a: Primary winding
- 21b: Secondary winding
- 22: Resistor
- La, Lb: Coated conductor
- Sa: Logic signal
- SB: CAN bus (communication path)
- Sd: Detection signal, differential signal
- Sf: Code specifying signal
- Sre: Restored signal
- TP3, TP4: Terminals of secondary winding
- Vth: Threshold voltage

## Claims

1. A signal generation apparatus that generates a code specifying signal (Sf) capable of specifying a code corresponding to a logic signal (Sa), based on the logic signal (Sa) that is transmitted via a communication path (SB) composed of a coated conductor (La, Lb), the signal generation apparatus (2A, 2C) comprising:
a signal restorer (8) that is configured to generate a restored signal (Sre) with a signal waveform that is equivalent to a signal waveform of the logic signal (Sa) by integrating a signal waveform corresponding to a differential waveform (Sd) of the logic signal (Sa) detected from the coated conductor (La, Lb); and
a signal generator (6) that is configured to generate the code specifying signal (Sf) by binarizing the restored signal (Sre) in comparison with a threshold voltage (Vth),
wherein
the signal restorer (8) includes a transformer (21) with a primary winding and a secondary winding and a resistor (22, 32) that is connected between respective terminals of the secondary winding, and
the signal restorer (8) is configured to generate the restored signal (Sre) by inputting a signal, which has been detected by an electrode (12a, 12b) placed in contact with a coating of the coated conductor (La, Lb) via a coupling capacitance between the electrode (12a, 12b) and the coated conductor (La, Lb), into the primary winding and integrating a signal waveform corresponding to a differential waveform (Sd) of the logic signal (Sa) outputted from the secondary winding.

2. A signal generation apparatus that generates a code specifying signal (Sf) capable of specifying a code corresponding to a logic signal (Sa), based on the logic signal (Sa) that is transmitted via a communication path (SB) composed of a coated conductor (La, Lb), the signal generation apparatus (2B, 2D) comprising:
a signal restorer (8) that is configured to generate a restored signal (Sre) with a signal waveform that is equivalent to a signal waveform of the logic signal (Sa) by integrating a signal waveform corresponding to a differential waveform (Sd) of the logic signal (Sa) detected from the coated conductor (La, Lb); and
a signal generator (6) that is configured to generate the code specifying signal (Sf) by binarizing the restored signal (Sre) in comparison with a threshold voltage (Vth),
wherein the signal restorer (8) includes a resistance element (25, 26, 32) into which a signal, which has been detected by an electrode (12a, 12b) placed in contact with a coating of the coated conductor (La, Lb)via capacitive coupling via a coupling capacitance between the electrode (12a, 12b) and the coated conductor (La, Lb), is inputted, and
the signal restorer (8) is configured to generate the restored signal (Sre) by integrating a signal waveform corresponding to a differential waveform (Sd) of the logic signal (Sa) generated at the resistance element (25, 26).

3. A signal generation apparatus that generates a code specifying signal (Sf) capable of specifying a code corresponding to a logic signal (Sa), based on the logic signal (Sa) that is transmitted via a communication path (SB) composed of a coated conductor (La, Lb), the signal generation apparatus (2A, 2C) comprising:
a signal restorer (8) that is configured to generate a restored signal (Sre) with a signal waveform that is equivalent to a signal waveform of the logic signal (Sa) by integrating a signal waveform corresponding to a differential waveform (Sd) of the logic signal (Sa) detected from the coated conductor (La, Lb); and
a signal generator (6) that is configured to generate the code specifying signal (Sf) by binarizing the restored signal (Sre) in comparison with a threshold voltage (Vth),
wherein the signal restorer (8) includes a transformer (21) with a primary winding (21a) and a secondary winding (21b) and a resistor (22, 32) that is connected between respective terminals of the secondary winding (21b), and
the signal restorer (8) is configured to generate the restored signal (Sre) by inputting a signal, which has been outputted from a current detection probe (PLa, PLb) attached to the coated conductor (La, Lb), into the primary winding (21a) and integrating a signal waveform corresponding to a differential waveform (Sd) of the logic signal (Sa) outputted from the secondary winding (21b).

4. A signal generation apparatus that generates a code specifying signal (Sf) capable of specifying a code corresponding to a logic signal (Sa), based on the logic signal (Sa) that is transmitted via a communication path (SB) composed of a coated conductor (La, Lb), the signal generation apparatus (2B, 2D) comprising:
a signal restorer (8) that is configured to generate a restored signal (Sre) with a signal waveform that is equivalent to a signal waveform of the logic signal (Sa) by integrating a signal waveform corresponding to a differential waveform (Sd) of the logic signal (Sa) detected from the coated conductor (La, Lb); and
a signal generator (6) that is configured to generate the code specifying signal (Sf) by binarizing the restored signal (Sre) in comparison with a threshold voltage (Vth),
wherein the signal restorer (8) includes a resistance element (25, 26, 32) into which a signal, which has been outputted from a current detection probe (PLa, PLb) attached to the coated conductor (La, Lb), is inputted, and is configured to generate the restored signal (Sre) by integrating a signal waveform corresponding to a differential waveform (Sd) of the logic signal (Sa) generated at the resistance element (25, 26).

5. The signal generation apparatus according to any one of claims 1 to 4,
further comprising a waveform shaper (7) that is disposed between the signal restorer (8) and the signal generator (6), is configured to shape the restored signal (Sre) into a single-ended signal whose voltage during a low voltage period is set at a target constant voltage (Vtg) and has a peak-to-peak voltage that is equivalent to a peak-to-peak voltage of the restored signal (Sre), and is configured to output the single-ended signal.

6. The signal generation apparatus according to any one of claims 1 to 4,
further comprising a waveform shaper (7) that is disposed between the signal restorer (8) and the signal generator (6), is configured to shape the restored signal (Sre) into a single-ended signal whose voltage during a high voltage period is set at a target constant voltage (Vtg) and has a peak-to-peak voltage that is equivalent to a peak-to-peak voltage of the restored signal (Sre), and is configured to output the single-ended signal.

7. A signal reading system comprising:
the signal generation apparatus (2A, 2B, 2C, 2D) according to any one of claims 1 to 6; and
a signal conversion apparatus (3) that is configured to convert the code specifying signal (Sf) generated by the signal generation apparatus (2A, 2B, 2C, 2D) into a signal of a communication format that conforms to a communication format of the logic signal (Sa) and is configured to output the converted signal.

## Patentansprüche

1. Signalerzeugungsvorrichtung, die ein Codespezifizierungssignal (Sf) erzeugt, das einen Code, der einem Logiksignal (Sa) entspricht, spezifizieren kann, anhand des Logiksignals (Sa), das über einen Kommunikationsweg (SB) übertragen wird, der aus einem beschichteten Leiter (La, Lb) gebildet ist, wobei die Signalerzeugungsvorrichtung (2A, 2C) aufweist:
einen Signalwiederhersteller (8), der so konfiguriert ist, dass er ein wiederhergestelltes Signal (Sre) mit einer Signalwellenform erzeugt, die einer Signalwellenform des Logiksignals (Sa) entspricht, durch Integrieren einer Signalwellenform, die einer differentiellen Wellenform (Sd) des Logiksignals (Sa) entspricht, das von dem beschichteten Leiter (La, Lb) erfasst wird; und
einen Signalgenerator (6), der so konfiguriert ist, dass er das Codespezifizierungssignal (Sf) durch Binarisieren des wiederhergestellten Signals (Sre) im Vergleich zu einer Schwellenspannung (Vth) erzeugt,
wobei der Signalwiederhersteller (8) einen Transformator (21) mit einer Primärwicklung und einer Sekundärwicklung sowie einen Widerstand (22, 32) enthält, der zwischen die jeweiligen Anschlüsse der Sekundärwicklung geschaltet ist, und
der Signalwiederhersteller (8) so konfiguriert ist, dass er das wiederhergestellte Signal (Sre) erzeugt, indem er ein Signal, das von einer Elektrode (12a, 12b) erfasst wurde, die über eine Kopplungskapazität zwischen der Elektrode (12a, 12b) und dem beschichteten Leiter (La, Lb) in Kontakt mit einer Beschichtung des beschichteten Leiters (La, Lb) platziert ist, in die Primärwicklung eingibt und eine Signalwellenform integriert, die einer differentiellen Wellenform (Sd) des Logiksignals (Sa) entspricht, das von der Sekundärwicklung ausgegeben wird.

2. Signalerzeugungsvorrichtung, die ein Codespezifizierungssignal (Sf) erzeugt, das einen Code, der einem Logiksignal (Sa) entspricht, spezifizieren kann, anhand des Logiksignals (Sa), das über einen Kommunikationsweg (SB) übertragen wird, der aus einem beschichteten Leiter (La, Lb) gebildet ist, wobei die Signalerzeugungsvorrichtung (2B, 2D) aufweist:
einen Signalwiederhersteller (8), der so konfiguriert ist, dass er ein wiederhergestelltes Signal (Sre) mit einer Signalwellenform erzeugt, die einer Signalwellenform des Logiksignals (Sa) entspricht, durch Integrieren einer Signalwellenform, die einer differentiellen Wellenform (Sd) des Logiksignals (Sa) entspricht, das von dem beschichteten Leiter (La, Lb) erfasst wird; und
einen Signalgenerator (6), der so konfiguriert ist, dass er das Codespezifizierungssignal (Sf) durch Binarisieren des wiederhergestellten Signals (Sre) im Vergleich zu einer Schwellenspannung (Vth) erzeugt,
wobei der Signalwiederhersteller (8) ein Widerstandselement (25, 26, 32) enthält, in das ein Signal eingegeben wird, das von einer Elektrode (12a, 12b) erfasst wurde, die mit einer Beschichtung des beschichteten Leiters (La, Lb) in Kontakt platziert ist, über kapazitives Koppeln mittels einer Kopplungskapazität zwischen der Elektrode (12a, 12b) und dem beschichteten Leiter (La, Lb), und
der Signalwiederhersteller (8) so konfiguriert ist, dass er das wiederhergestellte Signal (Sre) durch Integrieren einer Signalwellenform erzeugt, die einer differentiellen Wellenform (Sd) des Logiksignals (Sa) entspricht, das an dem Widerstandselement (25, 26) erzeugt wird.

3. Signalerzeugungsvorrichtung, die ein Codespezifizierungssignal (Sf) erzeugt, das einen Code, der einem Logiksignal (Sa) entspricht, spezifizieren kann, anhand des Logiksignals (Sa), das über einen Kommunikationsweg (SB) übertragen wird, der aus einem beschichteten Leiter (La, Lb) gebildet ist, wobei die Signalerzeugungsvorrichtung (2A, 2C) aufweist :
einen Signalwiederhersteller (8), der so konfiguriert ist, dass er ein wiederhergestelltes Signal (Sre) mit einer Signalwellenform erzeugt, die einer Signalwellenform des Logiksignals (Sa) entspricht, durch Integrieren einer Signalwellenform, die einer differentiellen Wellenform (Sd) des Logiksignals (Sa) entspricht, das von dem beschichteten Leiter (La, Lb) erfasst wird; und
einen Signalgenerator (6), der so konfiguriert ist, dass er das Codespezifizierungssignal (Sf) durch Binarisieren des wiederhergestellten Signals (Sre) im Vergleich zu einer Schwellenspannung (Vth) erzeugt,
wobei der Signalwiederhersteller (8) einen Transformator (21) mit einer Primärwicklung (21a) und einer Sekundärwicklung (21b) und einen Widerstand (22, 32) enthält, der zwischen die jeweiligen Anschlüsse der Sekundärwicklung (21b) geschaltet ist, und
der Signalwiederhersteller (8) so konfiguriert ist, dass er das wiederhergestellte Signal (Sre) erzeugt, indem er ein Signal, das von einer Stromerfassungssonde (PLa, PLb), die an dem beschichteten Leiter (La, Lb) angebracht ist, ausgegeben wurde, in die Primärwicklung (21a) eingibt und eine Signalwellenform integriert, die einer differentiellen Wellenform (Sd) des Logiksignals (Sa) entspricht, das von der Sekundärwicklung (21b) ausgegeben wird.

4. Signalerzeugungsvorrichtung, die ein Codespezifizierungssignal (Sf) erzeugt, das einen Code, der einem Logiksignal (Sa) entspricht, spezifizieren kann, anhand des Logiksignals (Sa), das über einen Kommunikationsweg (SB) übertragen wird, der aus einem beschichteten Leiter (La, Lb) gebildet ist, wobei die Signalerzeugungsvorrichtung (2B, 2D) aufweist:
einen Signalwiederhersteller (8), der so konfiguriert ist, dass er ein wiederhergestelltes Signal (Sre) mit einer Signalwellenform erzeugt, die einer Signalwellenform des Logiksignals (Sa) entspricht, durch Integrieren einer Signalwellenform, die einer differentiellen Wellenform (Sd) des Logiksignals (Sa) entspricht, das von dem beschichteten Leiter (La, Lb) erfasst wird; und
einen Signalgenerator (6), der so konfiguriert ist, dass er das Codespezifizierungssignal (Sf) durch Binarisieren des wiederhergestellten Signals (Sre) im Vergleich zu einer Schwellenspannung (Vth) erzeugt,
wobei der Signalwiederhersteller (8) ein Widerstandselement (25, 26, 32) enthält, in das ein Signal eingegeben wird, das von einer Stromerfassungssonde (PLa, PLb) ausgegeben wurde, die an dem beschichteten Leiter (La, Lb) angebracht ist, und so konfiguriert ist, dass er das wiederhergestellte Signal (Sre) durch Integrieren einer Signalwellenform erzeugt, die einer differentiellen Wellenform (Sd) des Logiksignals (Sa) entspricht, das an dem Widerstandselement (25, 26) erzeugt wird.

5. Signalerzeugungsvorrichtung nach einem der Ansprüche 1 bis 4,
ferner aufweisend einen Wellenform-Formgeber (7), der zwischen dem Signalwiederhersteller (8) und dem Signalgenerator (6) angebracht ist, so konfiguriert ist, dass er das wiederhergestellte Signal (Sre) in ein asymmetrisches Signal formt, dessen Spannung während einer Niederspannungsperiode auf eine konstante Zielspannung (Vtg) eingestellt ist und eine Spitze-Spitze-Spannung aufweist, die äquivalent zu einer Spitze-Spitze-Spannung des wiederhergestellten Signals (Sre) ist, und so konfiguriert ist, dass er das asymmetrische Signal ausgibt.

6. Signalerzeugungsvorrichtung nach einem der Ansprüche 1 bis 4,
ferner aufweisend einen Wellenform-Formgeber (7), der zwischen dem Signalwiederhersteller (8) und dem Signalgenerator (6) angebracht ist, so konfiguriert ist, dass er das wiederhergestellte Signal (Sre) in ein asymmetrisches Signal formt, dessen Spannung während einer Hochspannungsperiode auf eine konstante Zielspannung (Vtg) eingestellt ist und eine Spitze-Spitze-Spannung aufweist, die äquivalent zu einer Spitze-Spitze-Spannung des wiederhergestellten Signals (Sre) ist, und so konfiguriert ist, dass er das asymmetrische Signal ausgibt.

7. Signallesesystem, aufweisend:
die Signalerzeugungsvorrichtung (2A, 2B, 2C, 2D) nach einem der Ansprüche 1 bis 6; und
eine Signalumwandlungsvorrichtung (3), die so konfiguriert ist, dass sie das Codespezifizierungssignal (Sf), das von der Signalerzeugungsvorrichtung (2A, 2B, 2C, 2D) erzeugt wird, in ein Signal eines Kommunikationsformats umwandelt, das mit einem Kommunikationsformat des Logiksignals (Sa) übereinstimmt, und so konfiguriert ist, dass sie das umgewandelte Signal ausgibt.

## Revendications

1. Appareil de génération de signal qui génère un signal d'identification de code (Sf) capable d'identifier un code correspondant à un signal logique (Sa), sur la base du signal logique (Sa) qui est transmis via un trajet de communication (Sb) composé d'un conducteur revêtu (La, Lb), l'appareil de génération de signal (2A, 2C) comprenant :
une unité de récupération de signal (8) qui est configurée pour générer un signal récupéré (Sre) avec une forme d'onde de signal qui est équivalente à une forme d'onde de signal du signal logique (Sa) en intégrant une forme d'onde de signal correspondant à une forme d'onde différentielle (Sd) du signal logique (Sa) détecté à partir du conducteur revêtu (La, Lb) ; et
une unité de génération de signal (6) qui est configurée pour générer le signal d'identification de code (Sf) en binarisant le signal récupéré (Sre) par comparaison avec une tension de seuil (Vth),
dans lequel
l'unité de récupération de signal (8) comporte un transformateur (21) avec un enroulement primaire et un enroulement secondaire et une résistance (22, 32) qui est connectée entre des bornes respectives de l'enroulement secondaire, et
l'unité de récupération de signal (8) est configurée pour générer le signal récupéré (Sre) en entrant un signal, qui a été détecté par une électrode (12a, 12b) placée en contact avec un revêtement du conducteur revêtu (La, Lb) via une capacité de couplage entre l'électrode (12a, 12b) et le conducteur revêtu (La, Lb), dans l'enroulement primaire et en intégrant une forme d'onde de signal correspondant à une forme d'onde différentielle (Sd) du signal logique (Sa) entré à partir de l'enroulement secondaire.

2. Appareil de génération de signal qui génère un signal d'identification de code (Sf) capable d'identifier un code correspondant à un signal logique (Sa), sur la base du signal logique (Sa) qui est transmis via un trajet de communication (SB) composé d'un conducteur revêtu (La, Lb), l'appareil de génération de signal (2B, 2D) comprenant :
une unité de récupération de signal (8) qui est configurée pour générer un signal récupéré (Sre) avec une forme d'onde de signal qui est équivalente à une forme d'onde de signal du signal logique (Sa) en intégrant une forme d'onde de signal correspondant à une forme d'onde différentielle (Sd) du signal logique (Sa) détecté à partir du conducteur revêtu (La, Lb) ; et
une unité de génération de signal (6) qui est configurée pour générer le signal d'identification de code (Sf) en binarisant le signal récupéré (Sre) par comparaison avec une tension de seuil (Vth),
dans lequel l'unité de récupération de signal (8) comporte un élément de résistance (25, 26, 32) dans lequel un signal, qui a été détecté par une électrode (12a, 12b) placée en contact avec un revêtement du conducteur revêtu (La, Lb) via un couplage capacitif via une capacité de couplage entre l'électrode (12a, 12b) et le conducteur revêtu (La, Lb), est entré, et
l'unité de récupération de signal (8) est configurée pour générer le signal récupéré (Sre) en intégrant une forme d'onde de signal correspondant à une forme d'onde différentielle (Sd) du signal logique (Sa) généré au niveau de l'élément de résistance (25, 26).

3. Appareil de génération de signal qui génère un signal d'identification de code (Sf) capable d'identifier un code correspondant à un signal logique (Sa), sur la base du signal logique (Sa) qui est transmis via un trajet de communication (SB) composé d'un conducteur revêtu (La, Lb), l'appareil de génération de signal (2A, 2C) comprenant :
une unité de récupération de signal (8) qui est configurée pour générer un signal récupéré (Sre) avec une forme d'onde de signal qui est équivalente à une forme d'onde de signal du signal logique (Sa) en intégrant une forme d'onde de signal correspondant à une forme d'onde différentielle (Sd) du signal logique (Sa) détecté à partir du conducteur revêtu (La, Lb) ; et
une unité de génération de signal (6) qui est configurée pour générer le signal d'identification de code (Sf) en binarisant le signal récupéré (Sre) par comparaison avec une tension de seuil (Vth),
dans lequel l'unité de récupération de signal (8) comporte un transformateur (21) avec un enroulement primaire (21a) et un enroulement secondaire (21b) et une résistance (22, 32) qui est connectée entre des bornes respectives de l'enroulement secondaire (21b), et
l'unité de récupération de signal (8) est configurée pour générer le signal récupéré (Sre) en entrant un signal, qui a été délivré à partir d'une sonde de détection de courant (Pla, PLb) fixée au conducteur revêtu (La, Lb), dans l'enroulement primaire (21a) et en intégrant une forme d'onde de signal correspondant à une forme d'onde différentielle (Sd) du signal logique (Sa) délivré à partir de l'enroulement secondaire (21b).

4. Appareil de génération de signal qui génère un signal d'identification de code (Sf) capable d'identifier un code correspondant à un signal logique (Sa), sur la base du signal logique (Sa) qui est transmis via un trajet de communication (SB) composé d'un conducteur revêtu (La, Lb), l'appareil de génération de signal (2B, 2D) comprenant :
une unité de récupération de signal (8) qui est configurée pour générer un signal récupéré (Sre) avec une forme d'onde de signal qui est équivalente à une forme d'onde de signal du signal logique (Sa) en intégrant une forme d'onde de signal correspondant à une forme d'onde différentielle (Sd) du signal logique (Sa) détecté à partir du conducteur revêtu (La, Lb) ; et
une unité de génération de signal (6) qui est configurée pour générer le signal d'identification de code (Sf) en binarisant le signal récupéré (Sre) par comparaison avec une tension de seuil (Vth),
dans lequel l'unité de récupération de signal (8) comporte un élément de résistance (25, 26, 32) dans lequel un signal, qui a été délivré à partir d'une sonde de détection de courant (Pla, PLb) fixée au conducteur revêtu (La, Lb), est entré, et est configurée pour générer le signal récupéré (Sre) en intégrant une forme d'onde de signal correspondant à une forme d'onde différentielle (Sd) du signal logique (Sa) généré au niveau de l'élément de résistance (25, 26).

5. Appareil de génération de signal selon l'une quelconque des revendications 1 à 4,
comprenant en outre un dispositif de mise en forme de forme d'onde (7) qui est disposé entre l'unité de récupération de signal (8) et l'unité de génération de signal (6), est configuré pour mettre en forme le signal récupéré (Sre) en un signal à extrémité unique dont la tension pendant une période à basse tension est définie à une tension constante cible (Vtg) et présente une tension pic à pic qui est équivalente à une tension pic à pic du signal récupéré (Sre), et est configuré pour délivrer le signal à une seule extrémité.

6. Appareil de génération de signal selon l'une quelconque des revendications 1 à 4,
comprenant en outre un dispositif de mise en forme de forme d'onde (7) qui est disposé entre l'unité de récupération de signal (8) et l'unité de génération de signal (6), est configuré pour mettre en forme le signal récupéré (Sre) en un signal à une seule extrémité dont la tension pendant une période à haute tension est définie à une tension constante cible (Vtg) et présente une tension pic à pic qui est équivalente à une tension pic à pic du signal récupéré (Sre), et est configuré pour délivrer le signal à une seule extrémité.

7. Système de lecture de signal comprenant :
l'appareil de génération de signal (2A, 2B, 2C, 2D) selon l'une quelconque des revendications 1 à 6 ; et
un appareil de conversion de signal (3) qui est configuré pour convertir le signal d'identification de code (Sf) généré par l'appareil de génération de signal (2A, 2B, 2C, 2D) en un signal d'un format de communication qui est conforme à un format de communication du signal logique (Sa) et est configuré pour délivrer le signal converti.
